# EUROPEAN PATENT APPLICATION

(11) **EP 2 832 553 A1**
(43) Date of publication of application: **04.02.2015**
(21) Application number: 13768010.4
(22) Date of filing: 28.02.2013
(51) Int. Cl.: B41M 5/00, B41J 2/01, C09D 11/00

(54) **INKJET RECORDING METHOD AND PRINTED MATTER**

(30) Priority: 30.03.2012 JP 2012080647
(71) Applicant: FUJIFILM Corporation, Tokyo 106-8620 (JP)
(72) Inventor: HAYATA Yuuichi, Ashigarakami-gun Kanagawa 258-8577 (JP)
(74) Representative: Morpeth, Fraser Forrest
(86) International application number: PCT/JP2013/055346
(87) International publication number: WO 2013/146063

(57) **Abstract**

An ink jet recording method and a printed matter, in which the elution amount of the components in a film to the outside is small, a support is not easily shrunken, and a printed matter having suppressed odor and excellent curability and blocking resistance is obtained; are provided. The ink jet recording method includes discharging an ink composition onto a support, and irradiating active rays at an oxygen partial pressure of 0.15 atm or less to cure the ink composition, in which the support is a resin film having a film thickness of 10 µm to 90 µm; and the ink composition contains a polyfunctional (meth)acrylate compound, a monofunctional (meth)acrylate compound, and N-vinyllactams in a total amount of 60% by mass or more with respect to the total ink composition, and contains a polymerization initiator, and the content of the polymerization initiator having a molecular weight of less than 340 is less than 1% by mass of the total ink composition.

## Description

### BACKGROUND OF THE INVENTION

### 1. Field of the Invention

The present invention relates to an ink jet recording method and a printed matter.

### 2. Description of the Related Art

As an image recording method, in which an image is formed on a recording medium such as paper based on an image data signal, there are electrophotographic systems, sublimation type and fusion type thermal transfer systems, ink jet systems, and the like.

With regard to the ink jet system, the printing equipment is inexpensive, it is not necessary to use a plate during printing, and an image is formed directly on a recording medium by discharging an ink composition only on a required image area, and therefore, the ink composition can be used efficiently and the running cost is low particularly in the case of small lot production. In addition, the ink jet system has little noise and is excellent as an image recording system, and has thus been attracting attention in recent years.

Among these, a system using an ink composition for ink jet recording which is curable by irradiation with radiation such as ultraviolet rays (a radiation-curable ink jet recording ink composition) is an excellent system from the points of view that the drying property is excellent in comparison with solvent-based ink compositions since the majority of the components of the ink composition are cured by the irradiation with radiation such as ultraviolet rays and that it is possible to print onto various types of recording media since the images do not spread easily.

Examples of the ink composition for ink jet recording in the related art are shown in JP2011-502188T, JP2011-500932T, and U.S. Patent App. No. 2010/330296.

### SUMMARY OF THE INVENTION

An object of the present invention is to provide an ink jet recording method, in which the elution amount (migration) of the components in a film to the outside is small, a printed matter is not easily shrunken, and a printed matter having suppressed odor and excellent curability and blocking resistance is obtained, and a printed matter.

The above-described object of the present invention has been solved by the means according to the following ink jet recording method and printed matter. <2> to <16>, which are preferable embodiments, are also described below.
<1> An ink jet recording method including (step a) discharging an ink composition onto a support, and (step b) irradiating active rays at an oxygen partial pressure of 0.15 atm or less to cure the ink composition, in which the support is a resin film having a film thickness of 10 µm to 90 µm and containing at least one component selected from the group consisting of polyethylene terephthalate, polyethylene, polypropylene, and nylon; and the ink composition contains a (component A) polymerizable compound and a (component B) polymerization initiator; contains a (component A-1) polyfunctional (meth)acrylate compound, a (component A-2) monofunctional (meth)acrylate compound, and (component A-3) N-vinyllactams as the component A in a total amount of 60% by mass or more with respect to the total ink composition; contains at least one selected from the group consisting of a (component B-1) bisacylphosphine compound having a molecular weight of 340 or more, a (component B-2) α-aminoketone compound having a molecular weight of 340 or more, a (component B-3) compound represented by the following formula (1), and a (component B-4) compound represented by the following formula (2) as the component B; and does not contain a polymerization initiator having a molecular weight of less than 340 or has a content of the polymerization initiator having a molecular weight of less than 340 of 1% by mass or less of the total ink composition as the component B. 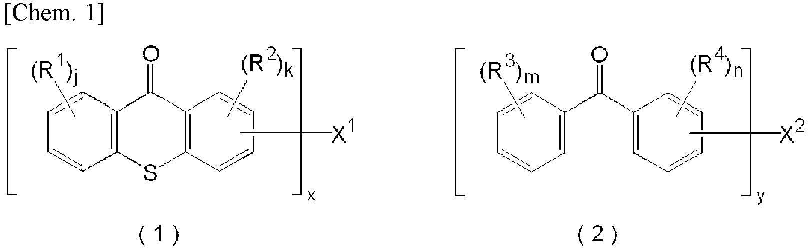 (In the formulae (1) and (2), R¹, R², R³, and R⁴ each independently represent an alkyl group which has 1 to 5 carbon atoms or a halogen atom, x and y each independently represent an integer of 2 to 4, j and m each independently represent an integer of 0 to 4, k and n each independently represent an integer of 0 to 3, when j, k, m, and n are integers of 2 or more, R¹, R², R³, and R⁴, which are present as a plurality, may be the same as or different from each other, X¹ represents a x-valent hydrocarbon chain having 2 to 300 carbon atoms, which may contain an ether bond and/or an ester bond, and X² represents a y-valent hydrocarbon chain having 2 to 300 carbon atoms, which may contain an ether bond and/or an ester bond.)
<2> The ink jet recording method as described in <1>, in which the active rays are LED.
<3> The ink jet recording method as described in <1> or <2>, in which the ink composition contains the component B-3 and/or the component B-4.
<4> The ink jet recording method as described in any one of <1> to <3>, in which the ink composition contains the component B-1 and/or the component B-2, and the component B-3 and/or the component B-4.
<5> The ink jet recording method as described in any one of <1> to <4>, in which the ink composition contains the component A-1, the component A-2, and the component A-3.
<6> The ink jet recording method as described in any one of <1> to <5>, in which a (component A-1-1) di(meth)acrylate compound having 8 to 12 atoms in the main chain is contained as the component A-1.
<7> The ink jet recording method as described in <6>, in which the component A-1-1 is at least one selected from the group consisting of ethylene oxide-modified neopentyl glycol di(meth)acrylate, propylene oxide-modified neopentyl glycol di(meth)acrylate, ethylene oxide-modified hexanediol di(meth)acrylate, propylene oxide-modified hexanediol di(meth)acrylate, nonanediol di(meth)acrylate, decanediol di(meth)acrylate, dodecanediol di(meth)acrylate, tripropylene glycol di(meth)acrylate, and triethylene glycol di(meth)acrylate.
<8> The ink jet recording method as described in any one of <1> to <7>, in which at least one selected from the group consisting of a (component A-2-1) monofunctional (meth)acrylate compound containing a hydrocarbon group having 9 to 10 carbon atoms in the molecule, a (component A-2-2) monofunctional (meth)acrylate compound having an aromatic group, and a (component A-2-3) monofunctional (meth)acrylate compound containing a long-chain alkyl group having 12 to 18 carbon atoms in the molecule is contained as the component A-2.
<9> The ink jet recording method as described in <8>, in which the component A-2-1 is at least one selected from the group consisting of t-butylcyclohexyl acrylate, dicyclopentenyloxyethyl acrylate, 3,3,5-trimethylcyclohexyl acrylate, and isobornyl acrylate.
<10> The ink jet recording method as described in <8> or <9>, in which the component A-2-2 is phenoxyethyl acrylate.
<11> The ink jet recording method as described in any one of <1> to <10>, in which N-vinyl caprolactam is contained as the component A-3.
<12> The ink jet recording method as described in any one of <1> to <11>, in which the compound represented by the formula (1) is a compound represented by the formula (1'), and the compound represented by the formula (2) is a compound represented by the formula (2'). 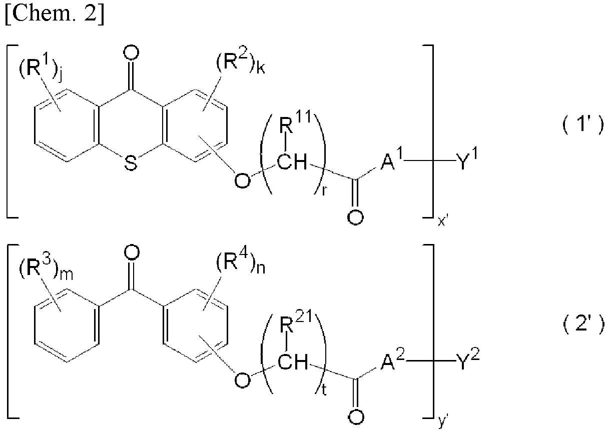 (In the formula (1'), R¹, R², j, and k have the same meanings as R¹, R², j, and k in the formula (1), R¹¹'s each independently represent a hydrogen atom or an alkyl group having 1 to 4 carbon atoms, r's each independently represent an integer of 1 to 6, x' represents an integer of 2 to 4, Y¹ represents a residue where hydrogen atoms of x' hydroxy groups are removed from polyhydroxy compounds which have at least x' hydroxy groups, and A¹ represents at least one group selected from the group consisting of the following (i) to (iii); and in the formula (2'), R³, R⁴, m, and n have the same meanings as R³, R⁴, m, and n in the formula (2), R^{21'}s each independently represent a hydrogen atom or an alkyl group having 1 to 4 carbon atoms, t's each independently represent an integer of 1 to 6, y' represents an integer of 2 to 4, Y² represents a residue where hydrogen atoms of y' hydroxy groups are removed from polyhydroxy compounds which have at least y' hydroxy groups, and A² represents at least one group selected from the group consisting of the following (i) to (iii).
   [Chem. 3]

   * -[O(CHR¹²CHR¹³)ₐ]_{d}-** (i)

   *-[O(CH₂)_{b}CO]_{d}-** (ii)

   *-[O(CH₂)_{b}CO]_{(d-1)}-[O(CHR¹²CHR¹³)ₐ]- ** (iii)

   (In the formulae (i) to (iii), either one of R¹² and R¹³ represents a hydrogen atom and the other represents a hydrogen atom, a methyl group, or an ethyl group, a represents an integer of 1 or 2, b represents an integer of 4 or 5, and d represents an integer of 1 to 20. Further, * represents the bonding position with the carbonyl carbon and ** represents the bonding position with Y¹ or Y².)
<13> The ink jet recording method as described in any one of <1> to <12>, in which the ink composition contains the component B-3.
<14> The ink jet recording method as described in any one of <1> to <13>, in which bis(2,4,6-trimethylbenzoyl)-phenylphosphine oxide is contained as the component B-1.
<15> The ink jet recording method as described in any one of <1> to <14>, in which at least one selected from the group consisting of 2-benzyl-2-dimethylamino-1-(4-morpholinophenyl)-butanone-1, 2-dimethylamino-2-(4-methylbenzyl)-1-(4-morpholin-4-yl-phenyl)-butan-1-one, and polyethylene glycol di{β-4-[4-(2-dimethylamino-2-benzyl)butanoylphenyl]piperazine} is contained as the α-aminoketone compound having a molecular weight of 340 or more.
<16> The ink jet recording method as described in any one of <1> to <15>, which is used for package printing.
<17> A printed matter obtained by the ink jet recording method as described in any one of <1> to <16>.

According to the present invention, it is possible to provide an ink jet recording method for obtaining a printed matter and a printed matter, in which the elution amount (migration) of the components in a film to the outside is small, the printed matter is not easily shrunken, and the printed matter has suppressed odor, excellent curability and excellent blocking resistance.

### BRIEF DESCRIPTION OF THE DRAWING

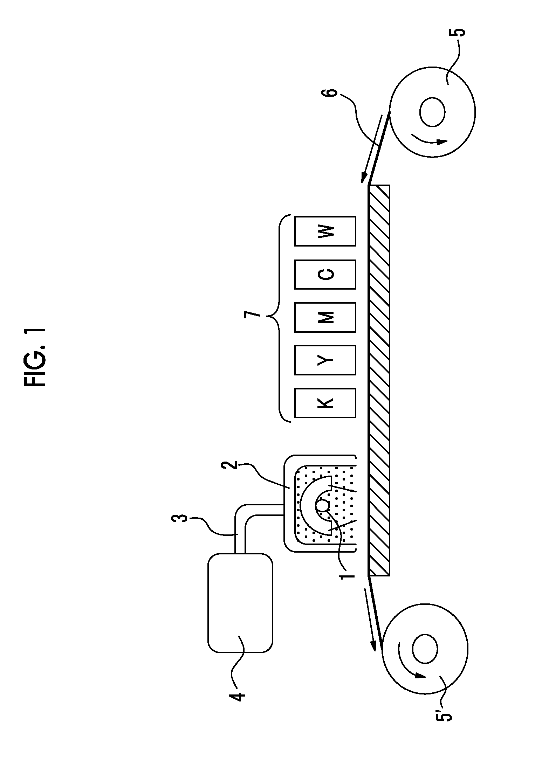

Fig. 1 is a schematic diagram which shows an example of an ink jet recording apparatus which is suitably used in the present invention.

### DESCRIPTION OF THE PREFERRED EMBODIMENTS

Hereinafter, the present invention will be described in detail.

The ink jet recording method of the present invention includes (step a) a step of discharging an ink composition (hereinafter also referred to the ink composition of the present invention, or simply an ink) onto a support, and (step b) a step of irradiating active rays at an oxygen partial pressure of 0.15 atm or less to cure the ink composition,

in which the support is a resin film having a film thickness of 10 µm to 90 µm and containing at least one component selected from the group consisting of polyethylene terephthalate, polyethylene, polypropylene, and nylon; and

the ink composition contains a (component A) polymerizable compound and a (component B) polymerization initiator; contains a (component A-1) polyfunctional (meth)acrylate compound, a (component A-2) monofunctional (meth)acrylate compound, and (component A-3) N-vinyllactams as the component A in a total amount of 60% by mass or more with respect to the total ink composition; contains at least one selected from the group consisting of a (component B-1) bisacylphosphine compound having a molecular weight of 340 or more, a (component B-2) α-aminoketone compound having a molecular weight of 340 or more, a (component B-3) compound represented by the following formula (1), and a (component B-4) compound represented by the following formula (2) as the component B; does not contain a polymerization initiator having a molecular weight of less than 340 or has a content of the polymerization initiator having a molecular weight of less than 340 of 1% by mass or less of the total ink composition as the component B.

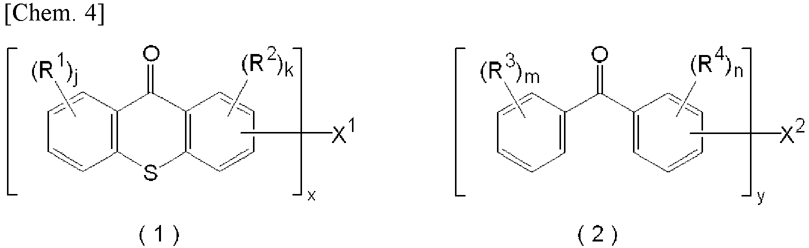

(In the formulae (1) and (2), R¹, R², R³, and R⁴ each independently represent an alkyl group which has 1 to 5 carbon atoms or a halogen atom, x and y each independently represent an integer of 2 to 4, j and m each independently represent an integer of 0 to 4, k and n each independently represent an integer of 0 to 3, when j, k, m, and n are integers of 2 or more, R¹, R², R³, and R⁴, which are present as a plurality, may be the same as or different from each other, X¹ represents a x-valent hydrocarbon chain having 2 to 300 carbon atoms, which may contain an ether bond and/or an ester bond, and X² represents a y-valent hydrocarbon chain having 2 to 300 carbon atoms, which may contain an ether bond and/or an ester bond.)

Furthermore, in the specification, the description of "A to B" which represents a numerical range has the same meaning as "from A to B". In addition, the "a (component A) polymerizable compound" or the like may be referred to simply as "component A" or the like. Further, "% by mass" and "parts by mass" have the same meanings as "% by weight" and "parts by weight", respectively.

Incidentally, in the present invention, the "meth(acrylate)" is described in the case where both or either of the "acrylate" and the "methacrylate" is indicated, and the "meth(acryl)" is described in the case where both or either of "acryl" and "methacryl" is indicated.

For the printed matter which is obtained by the active ray-curable ink jet recording method of the related art, there have been problems in that unreacted monomers, a polymerization initiator, a polymerization initiator residue, and the like are moved from the cured film to outside the film, in particular, there have been problems in that the amounts which are transferred to the packaged objects, the so-called migration (elution, transference) amounts are great in the case of use in package printing for food packages or the like. There have been other problems in that the odor of the cured film is strong and the odor permeates into the contents or the surrounding food.

Incidentally, in the active ray-curable ink jet printing, there have been problems in that a part of the printed matter is easily shrunken during curing, and in particular, in the case of printing on a recording medium (support) (for example, having a thickness of 10 µm to 90 µm) for food packages, the problem of shrinkage was remarkable.

In addition, there is a demand for curing sensitivity which is suitable for high productivity which is demanded in package printing.

It is possible for the present invention to provide an ink jet recording method, in which the elution amount (migration) of the components in a film to the outside is small, a printed matter is not easily shrunken, the odor of a printed matter is suppressed, and a printed matter having excellent curability and blocking resistance is obtained by adopting the above-described configuration.

The details of the mechanism are not known, but it is presumed by the present inventors that it is possible to obtain a printed matter where a crosslinked structure is formed in the cured film and migration is suppressed by adopting a specific composition for the component A, and thus, a printed matter having excellent adhesion to a base material is obtained. Further, by using a polymerization initiator having a large molecular weight as the component B, the polymerization initiator is less likely to move into a film, and also less likely to be volatile. Particularly, by using a polymerization initiator with a specific combination of a component B-1 and/or a component B-2, and a component B-3 and/or a component B-4, good curability is obtained, and as a result, the molecular weight of a polymer in the resulting cured film is large, and further, the crosslinking rate of the component A is increased and thus, it becomes difficult for residues such as decomposed products of the polymerization initiator remaining in the film and the monomers to be eluted outside the film. As a result, the present inventors have presumed that migration from the cured film, odor, and blocking are suppressed. In addition, the present inventors have found that high sensitivity is obtained by using a polymerization initiator selected from the group consisting of the component B-1 to the component B-4.

Further, in the present invention, irradiation of the active rays onto the ink composition which has been discharged to the support is performed under a low oxygen partial pressure. It is thus thought that, polymerization inhibition due to oxygen is suppressed and the curability is increased. Further, the mechanism is unclear, but it has been found that shrinkage of a printed matter obtained is suppressed even in the case of using a support having a small film thickness by irradiating active rays onto the ink composition which has been discharged to the support under a low oxygen partial pressure.

Hereinafter, the ink composition of the present invention will be described in detail.

### 1. Ink Composition

The ink composition of the present invention contains a (component A) polymerizable compound and a (component B) polymerization initiator; contains a (component A-1) polyfunctional (meth)acrylate compound, a (component A-2) monofunctional (meth)acrylate compound, and an (component A-3) N-vinyl compound as the component A in a total amount of 60% by mass or more with respect to the total ink composition; contains at least one selected from the group consisting of a (component B-1) bisacylphosphine compound having a molecular weight of 340 or more, a (component B-2) α-aminoketone compound having a molecular weight of 340 or more, a (component B-3) compound represented by the following formula (1), and a (component B-4) compound represented by the following formula (2) as the component B; does not contain a polymerization initiator having a molecular weight of less than 340 or has a content of the polymerization initiator having a molecular weight of less than 340 of 1% by mass or less of the total ink composition as the component B.

The ink composition of the present invention is an oily ink composition which is curable by active rays. The "active rays" are radiation rays capable of providing energy causing the generation of an initiating species in the ink composition by irradiation, and examples thereof include α rays, γ rays, X-rays, ultraviolet rays, visible light, and electron beams. Among these, from a viewpoint of curing sensitivity and the availability of devices, ultraviolet rays and electron beams are preferable, and ultraviolet rays are more preferable.

### (Component A) Polymerizable Compound

The ink composition of the present invention contains a (component A) polymerizable compound, and contains a (component A-1) polyfunctional (meth)acrylate compound, a (component A-2) monofunctional (meth)acrylate compound, and an (component A-3) N-vinyl compound in a total amount of 60% by mass or more with respect to the total ink composition as the component A. Further, the ink composition of the present invention may contain one kind or plural kinds of the component A-1 to the component A-3, but preferably contains at least the component A-1, the component A-2, and the component A-3. Further, each of the component A-1, the component A-2, and the component A-3 may be contained in one kind or plural kinds. In addition, the ink composition of the present invention may contain a polymerizable compound other than the component A-1 to the component A-3.

The total content of the component A-1 to the component A-3 is 60% by mass or more, preferably from 60% by mass or more to 97% by mass, more preferably from 70% by mass or more to 95% by mass, and still more preferably from 80% by mass or more to 95% by mass of the total ink composition.

If the total content of the components A-1 to A-3 in the ink composition is within the range above, the curability is excellent, the migration is suppressed, the adhesion to a substrate is excellent, and further, shrinkage of a printed matter is suppressed.

### (Component A-1) Polyfunctional (Meth)acrylate Compound

The ink composition of the present invention preferably contains a (component A-1) polyfunctional (meth)acrylate compound. By incorporating the component A, a crosslinked structure is formed in a cured film and migration is suppressed.

Examples of the component A-1 include a polyfunctional (meth)acrylate monomer and a polyfunctional (meth)acrylate oligomer. That is, the (component A-1) polyfunctional (meth)acrylate compound is preferably a polyfunctional (meth)acrylate monomer and/or a polyfunctional (meth)acrylate oligomer, and more preferably contains at least a bifunctional (meth)acrylate compound.

Further, the bifunctional (meth)acrylate compound is preferably a bifunctional acrylate compound, and particularly preferably contains at least a diacrylate monomer.

Preferred examples of the (component A-1) polyfunctional (meth)acrylate compound include a (component A-1-1) di(meth)acrylate compound (di(meth)acrylate monomer) having 8 to 12 atoms in the main chain.

Further, in the present invention, the monomer is a compound having a molecular weight of less than 1,000, and the oligomer is generally a polymer formed by bonding a finite number (generally 5 to 100) of monomers and has a weight average molecular weight of 1,000 or more.

Further, in the present invention, the (meth)acrylate monomer means a compound containing one or more (meth)acryloyloxy groups in the molecule, and having a molecular weight of less than 1,000.

In the present invention, the molecular weight of the (meth)acrylate monomer is preferably 700 or less, more preferably 500 or less, still more preferably from 226 to 358, and particularly preferably from 242 to 300. If the molecular weight is within the range above, both of the suppression of migration and odor of a printed matter and the reactivity can be satisfied.

### (Component A-1-1) Di(meth)acrylate Compound Having Number of Atoms in Main Chain of 8 to 12

In the present invention, the (component A-1-1) di(meth)acrylate compound (monomer) having 8 to 12 atoms in the main chain is preferably contained as the component A. By incorporating the component A-1-1, a printed matter having excellent crosslinkability, suppressed migration of the components in a film to the outside, and excellent adhesion to a base material can be obtained. In addition, the component A-1-1 provides flexibility suitable for a cured film and further provides an ink composition having low viscosity as a monomer and excellent dischargibility.

The component A-1-1 is preferably a compound represented by the following formula (a-1-1).

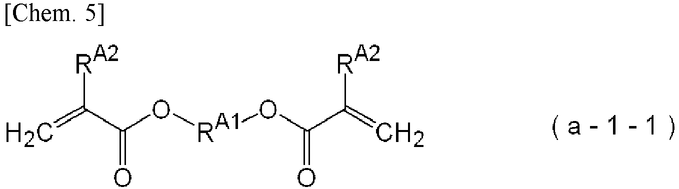

(In the formula (a-1-1), R^{A1} represents a divalent linking group having 8 to 12 atoms in the main chain, and R^{A2}'s each independently represent a hydrogen atom or a methyl group.)

In the formula (a-1-1), R^{A1} represents a divalent linking group having 8 to 12 atoms in the main chain, and the number of atoms in the main chain means that the number of atoms at the ends constituting the main chain linking the linking portions with acrylate groups at two positions of R^{A1} is from 8 to 12. In the case where the main chain has an ether bond (-O-), oxygen atoms constituting the ether bond are included in the number of atoms in the main chain. The atom of the main chain is preferably a carbon atom or an oxygen atom.

More specifically, in the case where the compound represented by the formula (a-1-1) is diethylene glycol diacrylate, the number of atoms in the main chain is 5, and in the case where the compound represented by the formula (a-1-1) is ethylene oxide-modified neopentyl glycol diacrylate (neopentyl glycol diacrylate modified with one mole of ethylene oxide at both ends), the number of atoms in the main chain is 9.

In the formula (a-1-1), R^{A2}'s each independently represent a hydrogen atom or a methyl group, and preferably a hydrogen atom. Further, in the formula (a-1-1), if there are two R^{A2}'s, they may be the same as or different from each other, but from the viewpoint of synthesis, they are preferably the same as each other.

Examples of the component A-1-1 include ethylene oxide (EO)-modified neopentyl glycol di(meth)acrylate (number of atoms in the main chain = 9), propylene oxide (PO)-modified neopentyl glycol di(meth)acrylate (number of atoms in the main chain=9), EO-modified hexanediol di(meth)acrylate (number of atoms in the main chain=9), PO-modified hexanediol di(meth)acrylate (number of atoms in the main chain = 9), octanediol di(meth)acrylate, nonanediol di(meth)acrylate (number of atoms in the main chain = 9), decanediol di(meth)acrylate (number of atoms in the main chain = 10), dodecanediol di(meth)acrylate (number of atoms in the main chain = 12), tripropylene glycol di(meth)acrylate (number of atoms in the main chain = 8), and triethylene glycol di(meth)acrylate (number of atoms in the main chain = 8), and from the viewpoints of suppression of migration, odor, and shrinkage, and the flexibility of a cured film, triethylene glycol diacrylate and PO-modified neopentyl glycol diacrylate are more preferable.

The components A-1-1 may be used singly or in combination of two or more kinds thereof.

The content of the component A-1-1 is preferably from 10% by mass to 90% by mass, more preferably from 15% by mass to 75% by mass, and particularly preferable from 20% by mass to 45% by mass of the total ink composition.

In the case where plural kinds of the components A-1-1 are used, it is preferable to adjust the total content thereof to the range above.

In the present invention, in addition to the component A-1-1, the (component A-1-2) other polyfunctional (meth)acrylate monomers may further be added as the (component A-1) polyfunctional (meth)acrylate compound.

### (Component A-1-2) Other Polyfunctional (Meth)acrylate Monomers

Preferred specific examples of other bifunctional (meth)acrylate monomers include dipropylene glycol di(meth)acrylate, tetraethylene glycol di(meth)acrylate, neopentyl glycol di(meth)acrylate, 3-methylpentanediol di(meth)acrylate, hexanediol di(meth)acrylate, and heptanediol di(meth)acrylate.

Further, examples of the trifuntional or higher (meth)acrylate compound include pentaerythritol tri(meth)acrylate, pentaerythritol tetra(meth)acrylate, dipentaerythritol tetra(meth)acrylate, trimethylolethanetri(meth)acrylate, trimethylolpropanetri(meth)acrylate, tetramethylolmethanetetra(meth)acrylate, and oligoester (meth)acrylate.

The viscosity of the polyfunctional (meth)acrylate monomer as the monomers at 25°C is preferably from 3 mPa·sec to 20 mPa·sec, and more preferably from 6 mPa·sec to 15 mPa·sec, from the viewpoint of maintaining a low ink viscosity. Further, the viscosity of the bifunctional (meth)acrylate monomer at 25°C is preferably within the range above, and the viscosity of the bifunctional acrylate monomer at 25°C is particularly preferably within the range above.

In the present invention, it is preferable to use a bifunctional acrylate monomer as the polyfunctional (meth)acrylate monomer from the viewpoint that a crosslinked structure is formed in a cured film, the migration, odor, and blocking are suppressed, the shrinkage of a printed matter is suppressed, and further, the viscosity of the ink composition is kept to be suitable for ink jet.

The content of the bifunctional acrylate monomer is preferably from 10% by mass to 80% by mass, more preferably from 15% by mass to 75% by mass, and still more preferably from 20% by mass to 45% by mass, with respect to the total mass of the ink composition.

In the case where a trifunctional or higher (meth)acrylate monomer is contained, the content of the trifunctional or higher (meth)acrylate monomers is preferably 30% by mass or less, more preferably 20% by mass or less, and still more preferably 15% by mass or less of the total ink composition, from the viewpoint of suppressing the shrinkage of the printed matter and maintaining a low ink viscosity.

Furthermore, in the case where the monofunctional (meth)acrylate monomer as described later is contained, the content of the monofunctional (meth)acrylate monomers is preferably 60% by mass or less, and more preferably 50% by mass or less of the total ink composition, from the viewpoint of suppressing migration, odor and blocking.

### (Component A-1-3) Polyfunctional (Meth)acrylate Oligomer

The ink composition of the present invention may contain a (component A-1-3) polyfunctional (meth)acrylate oligomer as the component A-1.

The oligomer is generally a polymer formed by the bonding of a finite number (generally 5 to 100) of monomers, and any one may be selected from known oligomers having 2 or more (meth)acryloyloxy groups, but in the present invention, the weight average molecular weight of the polyfunctional (meth)acrylate oligomers is 1,000 or more, preferably from 1,000 to 5,000, more preferably from 1,500 to 4,500, and particularly preferably from 2,000 to 4,000. If the weight average molecular weight is within the range above, the viscosity of the ink can be adjusted to be within a range suitable for ink jet while suppressing migration, odor, and blocking of a cured film.

Further, in the case where the oligomers have a weight average molecular weight of 1,000 or more but have a molecular weight distribution, the components having a molecular weight of 1,000 or less are preferably contained in the amount of 5% by mass or less with respect to the total polyfunctional (meth)acrylate oligomers, from the viewpoint of suppression of migration.

The di(meth)acrylate oligomer has two (meth)acryloyloxy groups, and is preferably bi-to hexafunctional, more preferably bi- to tetrafunctional, still more preferably bi- or trifunctional, and particularly preferably bifunctional. In addition, the polyfunctional (meth)acrylate oligomer is preferably a polyfunctional acrylate oligomer.

The polyfunctional (meth)acrylate oligomer in the present invention is preferably an oligoester (meth)acrylate, and among these, urethane (meth)acrylate, polyester (meth)acrylate, and epoxy (meth)acrylate are more preferable, and urethane (meth)acrylate is still more preferable.

Preferable examples of the urethane (meth)acrylate include an aliphatic urethane (meth)acrylate and an aromatic urethane (meth)acrylate, and more preferable examples include an aliphatic urethane (meth)acrylate.

In addition, the urethane (meth)acrylate is preferably a tetrafunctional or lower urethane (meth)acrylate, and more preferably a bifunctional urethane (meth)acrylate.

By incorporating a urethane (meth)acrylate, an ink composition having excellent adhesion to a base material and curability is obtained.

With regard to the component A-1-3, the Oligomer Handbook (edited by Junji Furukawa, The Chemical Daily Co., Ltd.) can also be referenced.

Moreover, examples of commercially available products of the polyfunctional (meth)acrylate oligomer can include the following.

Examples of the urethane (meth)acrylate include R1204, R1211, R1213, R1217, R1218, R1301, R1302, R1303, R1304, R1306, R1308, R1901, R1150, and the like, all manufactured by Dai-Ichi Kogyo Seiyaku Co., Ltd., the EBECRYL series manufactured by Daicel-Cytec Co., Ltd. (for example, EBECRYL 230, 270, 4858, 8402, 8804, 8807, 8803, 9260, 1290, 1290 K, 5129, 4842, 8210, 210, 4827, 6700, 4450, and 220), NK Oligo U-4HA, U-6HA, U-15HA, U-108A, U200AX, and the like, all manufactured by Shin-Nakamura Chemical Co., Ltd., and Aronix M-1100, M-1200, M-1210, M-1310, M-1600, M-1960, and the like, all manufactured by Toagosei Co..

Examples of the polyester (meth)acrylate include the EBECRYL series manufactured by Daicel-Cytec Co., Ltd., (for example, EBECRYL 770, IRR467, 81, 84, 83, 80, 675, 800, 810, 812, 1657, 1810, IRR302, 450, 670, 830, 870, 1830, 1870, 2870, IRR267, 813, IRR483, 811, and the like), and Aronix M-6100, M-6200, M-6250, M-6500, M-7100, M-8030, M-8060, M-8100, M-8530, M-8560, M-9050, and the like, all manufactured by Toagosei Co.

In addition, examples of the epoxy (meth)acrylate include the EBECRYL series manufactured by Daicel-Cytec Co., Ltd., (for example, EBECRYL 600, 860, 2958, 3411, 3600, 3605, 3700, 3701, 3703, 3702, 3708, RDX63182, 6040, and the like).

The polyfunctional (meth)acrylate oligomers may be used singly or in combination of two or more kinds thereof.

The content of the component A-1-3 in the ink composition in the present invention is preferably 15% by mass or less, and more preferably 10% by mass or less, with respect to the total mass of the ink composition.

### (Component A-2) Monofunctional (Meth)acrylate Compound

The ink composition of the present invention preferably contains a (component A-2) monofunctional (meth)acrylate compound as the (component A) polymerizable compound, and the component A-2 is preferably a monofunctional (meth)acrylate monomer.

At least one selected from the group consisting of a (component A-2-1) monofunctional (meth)acrylate compound containing a hydrocarbon group having 9 to 10 carbon atoms in the molecule and a (component A-2-2) monofunctional (meth)acrylate compound having an aromatic group is preferably contained as the component A-2.

### (Component A-2-1) Monofunctional (Meth)acrylate Compound Containing Hydrocarbon Group Having 9 to 10 Carbon Atoms in Molecule

In the present invention, a (component A-2-1) monofunctional (meth)acrylate compound containing a hydrocarbon group having 9 to 10 carbon atoms in the molecule is preferably contained as the (component A-2) monofunctional (meth)acrylate compound, and the component A-2-1 is more preferably a monofunctional acrylate compound containing a hydrocarbon group having 9 to 10 carbon atoms in the molecule.

It is presumed that since the component A-2-1 enhances the hardness of a film and thus suppresses the movement of the lower molecular components in a cured film, a printed matter having further suppression of migration and odor is obtained.

Generally, the monofunctional (meth)acrylate compound containing hydrocarbon group having 9 to 10 carbon atoms may be susceptible to oxygen polymerization inhibition and cause problems in terms of curability in the atmosphere in some cases. In the present invention, active rays are emitted in an atmosphere of a low oxygen partial pressure, and accordingly, the degree of oxygen polymerization inhibition is small and good curing characteristics can be obtained. Further, the component A-2-1 has a low viscosity of monomers, and by incorporating the component A-2-1, viscosity suitable for ink jet is obtained, which is thus preferable.

Here, the component A-2 means a compound having only one (meth)acryloyloxy group in the molecule and not having other polymerizable groups. Further, for example, in the dicyclopentenyl group as described later, an unsaturated bond is contained in an aliphatic ring, but such an unsaturated bond has extremely low polymerizability, and is not included in the polymerizable groups in the present invention.

The component A-2-1 is preferably a compound represented by the following formula (a-2-1).

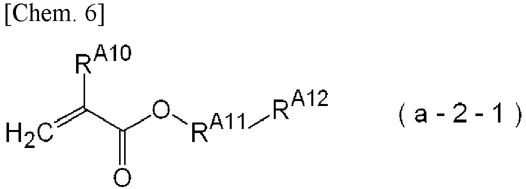

In the formula (a-2-1), R^{A10} represents a hydrogen atom or a methyl group, R^{A11} represents a single bond or a (poly)alkyleneoxy group, and R^{A12} represents a hydrocarbon group having 9 to 10 carbon atoms.

In the formula (a-2-1), R^{A10} represents a hydrogen atom or a methyl group, and is preferably a hydrogen atom.

In the formula (a-2-1), R^{A11} represents a single bond or a (poly)alkyleneoxy group, and the "(poly)alkyleneoxy group" represents an alkyleneoxy group or a polyalkyleneoxy group formed by the bonding of 2 or more alkyleneoxy groups. As the alkyleneoxy group, an ethyleneoxy group or a propyleneoxy group is preferable, and an ethyleneoxy group is more preferable. R^{A11} is particularly preferably a single bond or an ethyleneoxy group.

In the formula (a-2-1), R^{A12} represents a hydrocarbon group having 9 to 10 carbon atoms, and the hydrocarbon group is preferably a cyclic hydrocarbon group. The cyclic hydrocarbon group may be monocyclic or polycyclic, but is preferably one having a polycyclic structure. Further, it may be a saturated hydrocarbon ring or may have an unsaturated hydrocarbon ring having an unsaturated bond, and is not particularly limited. In addition, the hydrocarbon group having 9 to 10 carbon atoms is not always carbon forming a ring, and means carbon of the entire R^{A12}.

Examples of the component A-2-1 include isobornyl (meth)acrylate, 3,3,5-trimethylcyclohexyl acrylate, 4-t-butylcyclohexyl (meth)acrylate, dicyclopentanyloxyethyl (meth)acrylate, dicyclopentanyl (meth)acrylate, dicyclopentenyloxyethyl (meth)acrylate, and dicyclopentenyl (meth)ethyl acrylate, and from the viewpoint of odor and low volatility, 4-t-butylcyclohexyl acrylate and dicyclopentenyloxyethyl acrylate are more preferable.

The content of the component A-2-1 with respect to the total ink composition is preferably from 5% by mass to 50% by mass, more preferably from 10% by mass to 45% by mass, and still more preferably from 15% by mass to 35% by mass. If the content of the component A-2-1 is within the range above, a printed matter having suppressed migration and odor is obtained.

### (Component A-2-2) Monofunctional (Meth)acrylate Having Aromatic Group Compound

In the present invention, as the (component A-2) monofunctional (meth)acrylate compound, a (component A-2-2) monofunctional (meth)acrylate compound having an aromatic group can be preferably used. The cyclic structure of the aromatic group of the monofunctional (meth)acrylate compound having an aromatic group may contain a heteroatom such as O, N, and S.

The component A-2-2 is preferably a compound represented by the following formula (a-2-2).

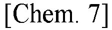

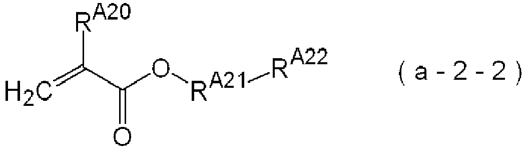

In the formula (a-2-2), R^{A20} represents a hydrogen atom or a methyl group.

R^{A21} represents a single bond, an ether bond (-O-), an ester bond (-C(O)O- or -OC(O)-), an amide bond (-C(O)NH- or -NHC(O)-), a carbonyl bond (-C(O)-), an optionally branched alkylene group having no more than 20 carbon atoms, or a linking group in which a combination thereof is bonded, and preferably a group or a bond selected from the group consisting of a single bond, an ether bond, an ester bond, and an alkylene group having no more than 20 carbon atoms.

R^{A22} represents an aromatic group containing a monocyclic aromatic group or a polycyclic aromatic group, and the cyclic structure of the aromatic group may contain a heteroatom such as O, N, and S.

Preferred examples of the aromatic group in R^{A22} include, in addition to a phenyl group, which is monocyclic aromatic, a polycyclic aromatic group having 2 to 4 rings.

Specific preferred examples of the polycyclic aromatic group include a naphthyl group, an anthryl group, a 1H-indenyl group, a 9H-fluorenyl group, a 1H-phenalenyl group, a phenanthrenyl group, a triphenylenyl group, a pyrenyl group, a naphthacenyl group, a tetraphenyl group, a biphenylenyl group, an as-indacenyl group, an s-indacenyl group, an acenaphthylenyl group, a fluoranthenyl group, an acephenanthrylenyl group, an aceanthrylenyl group, a chrysenyl group, and a pleiadenyl group.

These aromatic groups may be aromatic heterocyclic groups containing a heteroatom such as O, N, and S. Specific examples thereof include monocyclic aromatic heterocyclic groups such as a furyl group, a thienyl group, a 1H-pyrrolyl group, a 2H-pyrrolyl group, a 1H-pyrazolyl group, a 1H-imidazolyl group, an isoxazolyl group, an isothiazolyl group, a pyridyl group, a pyridazinyl group, a pyrimidinyl group, a pyrazinyl group, a triazolyl group, and a tetrazolyl group.

Further examples thereof include polycyclic aromatic heterocyclic groups such as a thianthrenyl group, a benzofuranyl group, an isobenzofuranyl group, a chromenyl group, an isochromenyl group, a xanthenyl group, a phenoxathiinyl group, an indolizinyl group, an isoindolyl group, an indolyl group, an indazolyl group, a purinyl group, a quinolizinyl group, an isoquinolyl group, a quinolyl group, a phthalazinyl group, a naphthyridinyl group, a quinoxalinyl group, a quinazolinyl group, a cinnolinyl group, a pteridinyl group, a carbazolyl group, a β-carbolinyl group, a phenanthridinyl group, an acridinyl group, a perimidinyl group, a phenanthrolinyl group, a phenazinyl group, a phenothiazinyl group, a phenoxazinyl group, and a pyrrolizinyl group.

The aromatic group may have one or more substituents such as a halogen atom, a hydroxyl group, an amino group, a mercapto group, a siloxane group, or a hydrocarbon group having nomore than 30 carbons. Two or more substituents of the aromatic group may form a cyclic structure containing a heteroatom such as O, N, and S as in, for example, phthalic anhydride or anhydric phthalimide.

Among these, as the monofunctional (meth)acrylate monomer having an aromatic group, phenoxyethyl (meth)acrylate is particularly preferable, and the phenoxyethyl acrylate is most preferable.

The content of the component A-2-2 with respect to the total ink composition is preferably from 5% by mass to 50% by mass, and more preferably from 10% by mass to 30% by mass.

### (Component A-2-3) Monofunctional (Meth)acrylate Compound Containing Long-Chain Alkyl Group Having 12 to 18 Carbon Atoms in Molecule

In the present invention, a (component A-2-3) monofunctional (meth)acrylate compound containing a long-chain alkyl group having 12 to 18 carbon atoms in the molecule may be contained, in addition to the component A-2-1 and the component A-2-2. By incorporating a long-chain alkyl group having 12 or more carbon atoms in the molecule, migration and odor are suppressed, while when the number of carbon atoms is 18 or less, low viscosity of the ink can be maintained.

The component A-2-3 is preferably a compound represented by the following formula (a-2-3).

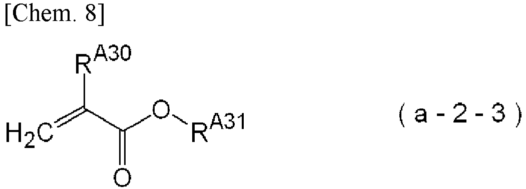

In the formula (a-2-3), R^{A30} represents a hydrogen atom or a methyl group, and R^{A31} represents an alkyl group having 12 to 18 carbon atoms.

In the formula (a-2-3), R^{A30} represents a hydrogen atom or a methyl group, and is preferably a hydrogen atom.

In the formula (a-2-3), R^{A31} represents an alkyl group having 12 to 18 carbon atoms, and the alkyl group may be either linear or branched, but it is preferably linear.

Examples of the component A-2-3 include lauryl (meth)acrylate, tridecyl (meth)acrylate, and stearyl (meth)acrylate.

The components A-2-3 may be used singly or in combination of plural kinds thereof.

The content of the component A-2-3 with respect to the total ink composition is preferably from 2% by mass to 20% by mass, and more preferably from 3% by mass to 15% by mass.

Moreover, in the present invention, the other monofunctional (meth)acrylate compounds may be contained, in addition to the components A-2-1 to A-2-3.

### (Component A-3) N-Vinyllactams

The ink composition of the present invention preferably contains (component A-3) N-vinyllactams as the component A.

As the component A-3, a compound represented by the formula (A) is preferable.

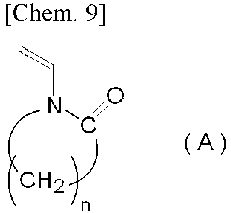

In the formula (A), n represents an integer of 2 to 6; from the viewpoint of flexibility after the ink composition is cured, adhesion to a recording medium, and ease of availability of raw materials, n is preferably an integer of 3 to 6, more preferably an integer of 3 or 5, and particularly preferably 5, which corresponds to N-vinylcaprolactam. The N-vinylcaprolactam is preferable since it is highly safe, is commonly used and easily available at a relatively low price, and particularly provides good ink curability and adhesion of a cured film to a recording medium.

Further, the N-vinyllactams may have a substituent such as an alkyl group and an aryl group on the lactam ring, and may have a saturated or unsaturated cyclic structure linked thereto.

The components A-3 may be used singly or in combination of two or more kinds thereof.

The content of the component A-3 is preferably from 5% by mass to 40% by mass, more preferably from 10% by mass to 35% by mass, and still more preferably from 15% by mass to 30% by mass, with respect to the total mass of the ink composition. Within the ranges above, a printed matter having excellent flexibility is obtained.

In the present invention, the ink composition contains a (component A-1) polyfunctional (meth)acrylate compound, a (component A-2) monofunctional (meth)acrylate compound, and (component A-3) N-vinyllactams in a total amount of 60% by mass or more, preferably 60% by mass to 97% by mass, more preferably 70% by mass to 95% by mass, and still more preferably 80% by mass to 95% by mass, with respect to the total ink composition. In the present invention, the ink composition preferably contains at least the component A-1, more preferably contains at least the component A-1 and the component A-2, and still more preferably the component A-1, the component A-2, and the component A-3.

In addition, the di(meth)acrylate compound, the monofunctional (meth)acrylate compound, and the N-vinyllactams are contained in a total amount of preferably 60% by mass or more, more preferably 60% by mass to 97% by mass, more preferably 70% by mass to 95% by mass, and particularly preferably 80% by mass to 95% by mass of the total ink composition.

Further, the diacrylate monomer, the monofunctional acrylate monomer, and the N-vinyllactams are contained in a total amount of preferably 60% by mass or more, more preferably 60% by mass to 97% by mass, still more preferably 70% by mass to 95% by mass, and particularly preferably 80% by mass to 95% by mass of the total ink composition.

The ink composition in the present invention preferably contains at least one selected from the group consisting of a (component A-1-1) di(meth)acrylate compound having 8 to 12 atoms in the main chain, a (component A-2-1) monofunctional (meth)acrylate compound containing a hydrocarbon group having 9 to 10 carbon atoms in the molecule, a (component A-2-2) monofunctional (meth)acrylate compound having an aromatic group, a (component A-2-3) monofunctional (meth)acrylate compound containing a long-chain alkyl group having 12 to 18 carbon atoms in the molecule, and (component A-3) N-vinyllactams, and more preferably contains at least one selected from the group consisting of the (component A-1-1) di(meth)acrylate compound having 8 to 12 atoms in the main chain, the (component A-2-1) monofunctional acrylate compound containing a hydrocarbon group having 9 to 10 carbon atoms in the molecule, and the (component A-3) N-vinyllactams, as the (component A) polymerizable compound.

In addition, the ink composition preferably contains at least the component A-1-1 and the component A-2-1, more preferably at least the component A-1-1, the component A-2-1, and the component A-3, and still more preferably the component A-1-1, the component A-2-1, the component A-2-3, and the component A-3.

### (Component A-4) Other Polymerizable Compounds

The ink composition of the present invention may further contain (component A-4) other polymerizable compounds, in addition to the component A-1 to the component A-3.

Examples of the other polymerizable compounds include unsaturated carboxylic acids such as itaconic acid, crotonic acid, isocrotonic acid, and maleic acid, and salts thereof, anhydrides having ethylenically unsaturated groups, acrylonitrile, styrene, and radically polymerizable compounds such as various unsaturated polyesters, unsaturated polyether, unsaturated polyamide, unsaturated urethane, (meth)acrylamide compounds, and vinylether compounds.

Further, as the other polymerizable compounds, specifically, radically polymerizable or crosslinkable monomers, oligomers, and polymers that are commercial products or are industrially known, such as those described in "Crosslinking Agent Handbook", edited by Shinzo Yamashita (1981, Taiseisha); "UV/EB Curing Handbook (Starting Materials Ed.)" edited by Kiyoshi Kato (1985, Kobunshi Kankoukai); "Application and Market of UV/EB Curing Technology" edited by Rad Tech, p. 79 (1989, CMC); and "Polyester Resin Handbook" edited by Eiichiro Takiyama (1988, The Nikkan Kogyo Shimbun Ltd.), and the like can be used.

The molecular weight of the other polymerizable compound is preferably from 80 to 2,000, more preferably from 80 to 1,000, and still more preferably from 80 to 800.

In the case where the ink composition of the present invention contains the other polymerizable compound, the content of the other polymerizable compound of the ink composition in the present invention is preferably from 1% by mass to 40% by mass, more preferably from 3% by mass to 30% by mass, and particularly preferably from 5% by mass to 25% by mass, with respect to the total mass of the ink composition.

### (Component B) Polymerization Initiator

The ink composition of the present invention contains at least one selected from the group consisting of a (component B-1) Bisacylphosphine compound having a molecular weight of 340 or more, a (component B-2) α-aminoketone compound having a molecular weight of 340 or more, a (component B-3) compound represented by the following formula (1), and a (component B-4) compound represented by the following formula (2) as the (component B) polymerization initiator. Further, a polymerization initiator having a molecular weight of less than 340 may not be contained, or the content of the polymerization initiator having a molecular weight of less than 340 is 1% by mass or less of the total ink composition.

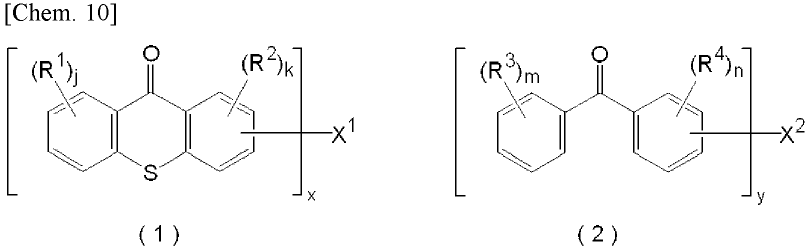

(In the formulae (1) and (2), R¹, R², R³, and R⁴ each independently represent an alkyl group which has 1 to 5 carbon atoms or a halogen atom, x and y each independently represent an integer of 2 to 4, j and m each independently represent an integer of 0 to 4, k and n each independently represent an integer of 0 to 3, when j, k, m, and n are integers of 2 or more, R¹, R², R³, and R⁴, which are present as a plurality, may be the same as or different from each other, X¹ represents a x-valent hydrocarbon chain having 2 to 300 carbon atoms, which may contain an ether bond and/or an ester bond, and X² represents a y-valent hydrocarbon chain having 2 to 300 carbon atoms, which may contain an ether bond and/or an ester bond.)

Moreover, the polymerization initiator of the present invention not only includes a compound which absorbs external energy such as active rays to generate a polymerization initiating species, but also a compound (in other words, a sensitizer) which absorbs specific active rays to promote decomposition of the polymerization initiator. In addition, the polymerization initiator also includes a compound (in other words, a co-initiator) which has a function of increasing the radical generation efficiency of the polymerization initiator.

### (Component B-1) Bisacylphosphine Compound Having Molecular Weight of 340 or More

As the component B-1, a bisacylphosphine oxide compound having a molecular weight of 340 or more is preferable, and the bisacylphosphine oxide compound having a molecular weight of 340 or more is not particularly limited and known ones may be used. However, among the compounds represented by the following formula (b-1), a compound having a molecular weight of 340 or more is preferable.

The components B-1 may be used singly or in combination of two or more kinds thereof.

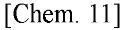

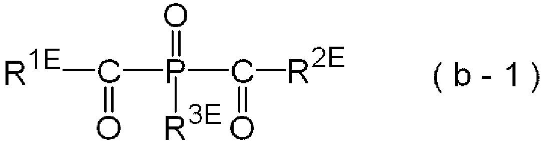

(In the general formula (b-1), R^{1E}, R^{2E}, and R^{3E} independently represent an aromatic hydrocarbon group which may have a halogen atom, a methyl group, or an ethyl group as a substituent.)

As the component B-1, ones having a molecular weight of 340 or more among the known bisacylphosphine oxide compounds can be used. Examples thereof include the bisacylphosphine oxide compounds described in JP1991-101686A (JP-H03-101686A), JP 1993-345790A (JP-H05-345790A), JP1994-298818A(JP-H06-298818A).

Specific examples thereof include bis(2,6-dichlorobenzoyl) phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the component B-1, bis(2,4,6-trimethylbenzoyl)phenylphosphine oxide (IRGACURE 819, manufactured by BASF Japan Ltd.), or bis(2,6-dimethoxybenzoyl)-2,4,4-trimethylpentylphenylphosphine oxide is preferable, and bis(2,4,6-trimethylbenzoyl)phenylphosphine oxide is particularly preferable.

### (Component B-2) α-Aminoketone Compound Having Molecular Weight of 340 or More

The component B-2 is not particularly limited and known ones can be used. However, among the compounds represented by the following formula (b-2), a compound having a molecular weight of 340 or more is preferable. Further, the components B-2 may be used singly or in combination of two or more kinds thereof.

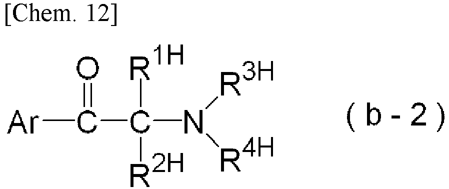

In the formula (b-2), Ar represents a phenyl group which is substituted with -SR^{5H} or -N(R^{7H})(R^{8H}), R^{5H} represents a hydrogen atom or an alkyl group, R^{1H} and R^{2H} each independently represent an alkyl group having 1 to 8 carbon atoms, R^{3H} and R^{4H} each independently represent a hydrogen atom, an alkyl group having 1 to 12 carbon atoms, an alkyl group having 2 to 4 carbon atoms, which is substituted with an alkoxy group having 1 to 4 carbon atoms, or an alkenyl group having 3 to 5 carbon atoms. An alkylene group having 2 to 9 carbon atoms may be configured by bonding R^{1H} and R^{2H} to each other. An alkylene group having 3 to 7 carbon atoms may be formed by bonding R^{3H} and R^{4H} to each other, and the alkylene group may be a group which includes -O- or N(R^{6H})- in the alkylene chain. R^{6H} represents an alkyl group having 1 to 4 carbon atoms. R^{7H} and R^{8H} each independently represent a hydrogen atom, an alkyl group having 1 to 12 carbon atoms, an alkyl group having 2 to 4 carbon atoms, which is substituted with an alkoxy group having 1 to 4 carbon atoms, or an alkenyl group having 3 to 5 carbon atoms. An alkylene group having 3 to 7 carbon atoms may be formed by bonding R^{7H} and R^{8H} to each other, and the alkylene group may be a group which includes -O- or N(R^{6H})- in the alkylene chain. Here, R^{6H} has the same meaning as described above.

Examples of the α-aminoketone compound having a molecular weight of 340 or more include 2-benzyl-2-dimethylamino-1-(4-morpholinophenyl)-butanone-1 (IRGACURE 369, manufactured by BASF Japan Co., Ltd.), and 2-dimethylamino-2-(4-methylbenzyl)-1-(4-morpholin-4-yl-phenyl)-butan-1-one (IRGACURE 379).

In addition, as the component B-1-2, polymer α-aminoketone compounds are also preferable, and specific examples thereof include polyethylene glycol di{β-4-[4-(2-dimethylamino-2-benzyl)butanoylphenyl]piperazine} (Omnipol 910, average molecular weight of 1,032, manufactured by Insight High Technology). As the molecular weight of the component B-1 and the component B-2, the catalogue values of the compounds may be used in the case of using commercially available compounds as the component B-1 and the component B-2.

### (Component B-3) Compound Represented by the formula (1)

The ink composition of the present invention preferably contains a (component B-3) compound represented by the formula (1) as the component B.

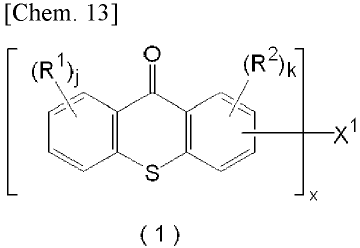

(In the formula (1), R¹ and R² each independently represent an alkyl group having 1 to 5 carbon atoms or a halogen atom, j represents an integer of 0 to 4, k represents an integer of 0 to 3, when j and k are integers of 2 or more, R¹ and R², which are present as a plurality, may be the same as or different from each other, and X¹ represents a x-valent hydrocarbon chain having 2 to 300 carbon atoms, which may contain an ether bond and/or an ester bond.)

In the formula (1), R¹ and R² each independently represent an alkyl group having 1 to 5 carbon atoms or a halogen atom, and the alkyl group having 1 to 5 carbon atoms may be any of linear, branched, or cyclic, but it is preferably linear or branched. Further, R¹ and R² are each preferably an alkyl group having 1 to 4 carbon atoms, more preferably an alkyl group having 1 to 3 carbon atoms, and still more preferably an ethyl group or an isopropyl group. Examples of the halogen atom include a fluorine atom, a chlorine atom, a bromine atom, and an iodine atom, and preferably a chlorine atom. R¹ and R² are particularly preferably an ethyl group, an isopropyl group, or a chlorine atom.

In the formula (1), j is preferably an integer of 0 to 4, more preferably 0 to 2, and still more preferably 0 or 1. In the case where j is an integer of 2 or more, R¹'s, which are present as a plurality, may be the same as or different from each other.

In the formula (1), k represents an integer of 0 to 3, preferably 0 to 2, more preferably 0 or 1, and still more preferably 0. In the case where k is an integer of 2 or more, R²'s, which are present as a plurality, may be the same as or different from each other.

In the formula (1), x is preferably an integer of 2 to 4, more preferably 3 or 4, and still more preferably 4.

In the formula (1), X¹ represents an x-valent linking group including an x-valent hydrocarbon chain having 2 to 300 carbon atoms, which may contain an ether bond (-O-) and/or an ester bond (-(C=O)-O-).

Further, in the formula (1), there are a plurality (x) of thioxanthone structures (in the formula (1), structures represented in "[ ]") excluding X¹ which is a linking group, but these may be the same as or different from each other, and are not particularly limited. From the viewpoint of synthesis, the structures are preferably the same.

In the compound represented by the formula (1), the substitution position on the thioxanthone is set to be represented as follows.

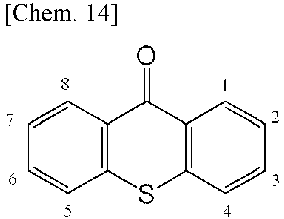

The substitution position of X¹ is the first to the fourth position, and the second position, the third position or the fourth position is preferable, the second position or the fourth position is more preferable, and the fourth position is still more preferable.

The substitution position of R¹ is the fifth to the eighth position, the sixth position and the seventh position are preferable, and the sixth position is more preferable.

In addition, the substitution position of R² is the first to the fourth position, the first position, the second position, and the third position are preferable, and the first position is more preferable.

The compound represented by the formula (1) is preferably a compound represented by the following formula (1').

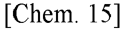

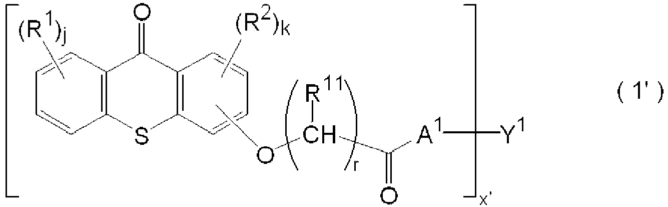

In the formula (1'), R¹, R², j, and k have the same meanings as R¹, R², j, and k in the formula (1), and the preferable ranges thereof are also the same.

In the formula (1'), R¹¹'s each independently represent a hydrogen atom or an alkyl group having 1 to 4 carbon atoms, and it is preferably a hydrogen atom, a methyl group, or an ethyl group, and more preferably a hydrogen atom.

In the formula (1'), r's each independently represent an integer of 1 to 6, and it is preferably an integer of 1 to 3, more preferably 1 or 2, and still more preferably 1. In addition, when r is 2 or more, R¹¹'s, which are present as a plurality, may be the same as or different from each other.

x' represents an integer of 2 to 4, preferably 2 or 3, and more preferably 2.

Y¹ represents a residue where hydrogen atoms of x' hydroxy groups are removed from polyhydroxy compounds which have at least x' hydroxy groups, and a residue where hydrogen atoms of all (x') the hydroxy groups are removed from polyhydroxy compounds which have x' hydroxy groups is preferable. Specifically, a residue where the hydrogen atoms of x' hydroxy groups are removed from polyhydroxy compounds selected from the group consisting of ethylene glycol, propylene glycol, butylene glycol, glycerin, trimethylol propane, ditrimethylolpropane, and pentaerythritol is preferable, and additionally, a residue where the hydrogen atoms of all the hydroxy groups are removed is preferable.

In the formula (1'), A¹ represents a group selected from the group consisting of the following (i) to (iii).
[Chem. 16]

* -[O(CHR¹²CHR¹³)ₐ]_{d}-** (i)

* -[O(CH₂)_{b}CO]_{d}- ** (ii)

*-[O(CH₂)_{b}CO]_{(d-1)}-[O(CHR¹²CHR¹³)ₐ]-** (iii)

In the formulae (i) to (iii), either one of R¹² and R¹³ represents a hydrogen atom and the other represents a hydrogen atom, a methyl group, or an ethyl group, a represents an integer of 1 or 2, b represents an integer of 4 or 5, and d represents an integer of 1 to 20. Further, * represents the bonding position with the carbonyl carbon and ** represents the bonding position with Y¹.

A¹ is preferably a group represented by the formula (i), and more preferably *-(OCH₂CH₂)_{d}-**,*-(OCH₂CH₂CH₂CH₂)_{d}-**, or *-O(CH(CH₃)CH₂)_{d}-**. In this case, d is more preferably an integer of 3 to 10.

The molecular weight of the component B-3 is preferably from 500 to 3,000, more preferably 800 to 2,500, and still more preferably 1,000 to 2,000.

If the molecular weight is 500 or more, the elution of the compound from the cured film is suppressed and it is possible to obtain an ink composition having suppressed migration, odor, and blocking. On the other hand, if the molecular weight is 3,000 or less, the steric hindrance of the molecule is small and further, the degree of freedom in the liquid/film of the molecule is maintained and it is possible to obtain a high sensitivity.

Further, in the case where the component B-3 is a mixture of a plurality of compounds where the numbers of carbon atoms and the like are different, the weight average molecular weight is preferably in the range above. The weight average molecular weight of the component B-3 can be calculated as a weight average molecular weight in terms of polystyrene measured by gel permeation chromatography (GPC). For GPC, HLC-8220 GPC (manufactured by Tosoh Corporation) is used, TSKgeL Super AWM-H (manufactured by Tosoh Corporation) is used as a column, and N-methylpyrrolidone is used as a carrier.

Specific examples of the component B-3 are shown below, but the present invention is not limited to the following compounds.

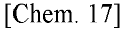

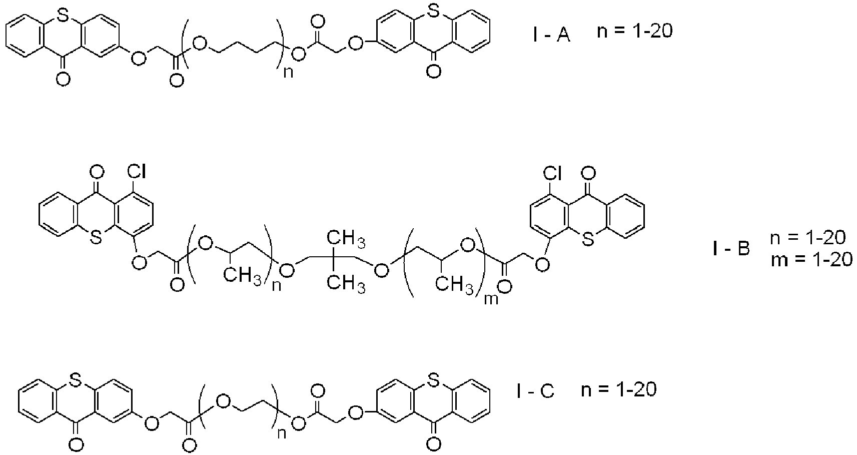

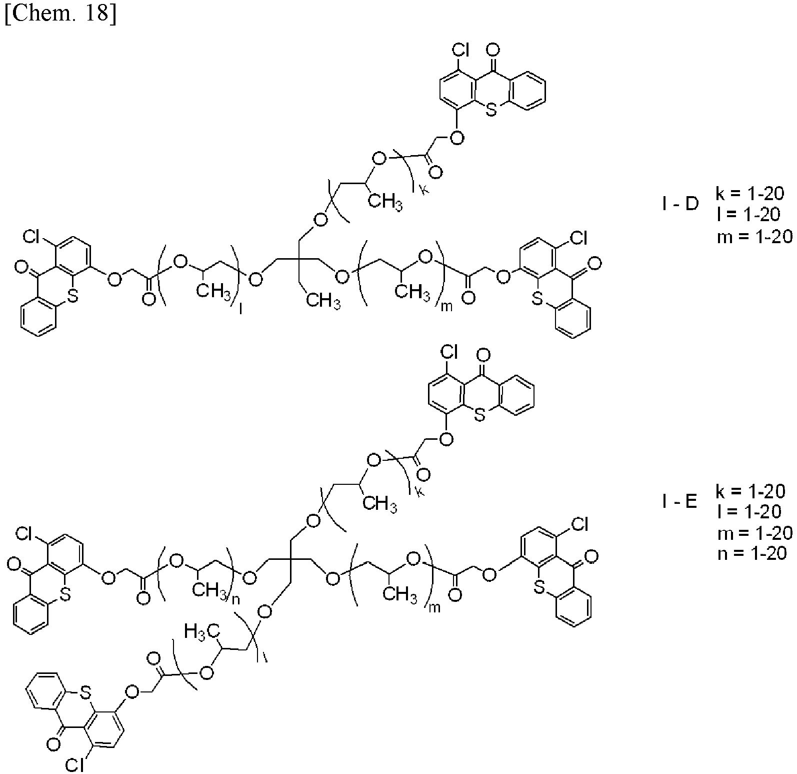

Even among these, the compound (I-A) or (I-E) is preferable, and the compound (I-E) is more preferable.

As the compound which is represented by the formula (1), commercially available compounds can be used. Specific examples thereof include Speedcure 7010 (1,3-di({α-[1-chloro-9-oxo-9H-thioxanthen-4-yl]oxy}acetylpoly[oxy(1-methylethylene)])oxy) -2, 2-bis({α-[1-chloro-9-oxo-9H-thioxanthen-4-yl]oxy}acetylpoly[oxy(1-methylethylene)])oxym ethyl)propane, CAS No. 1003567-83-6), and Omnipol TX (Polybutylene glycol bis(9-oxo-9H-thioxanthenyloxy)acetate, CAS No. 813452-37-8).

The compounds represented by the formula (1) can be prepared using a known reaction and is not particularly limited, but for example, the compounds represented by the formula (1') can be prepared by reacting a compound represented by the following formula (1-1) with a compound represented by the following formula (1-2).

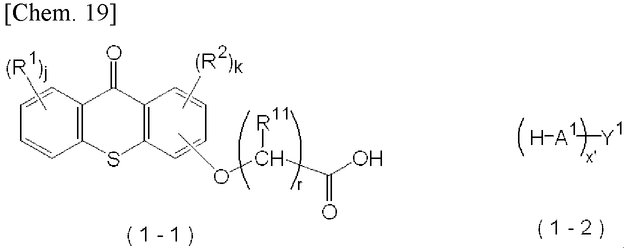

In the formulae (1-1) and (1-2), R¹, R², R¹¹, A¹, Y¹, j, k, r, and x' have the same meanings as in the formula (1') and the preferable ranges thereof are also the same.

The above-described reaction is preferably carried out in the presence of a solvent and examples of suitable solvents include aromatic hydrocarbons such as benzene, toluene, and xylene.

In addition, the reaction is preferably carried out in the presence of a catalyst, and examples of the catalyst include sulfonic acid (for example, p-toluene sulfonic acid, and methane sulfonic acid), inorganic acids (for example, sulfuric acid, hydrochloric acid, and phosphoric acid), and Lewis acids (aluminum chloride, boron trifluoride, and organotitanates).

The reaction temperature and the reaction time are not particularly limited.

After the completion of the reaction, it is possible to separate the product by isolation the reaction mixture using known means, and if desired, washing and drying.

### (Component B-4) Compound Represented by Formula (2)

The ink composition of the present invention preferably contains a (component B-4) compound represented by the formula (2) as the component B-4.

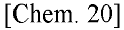

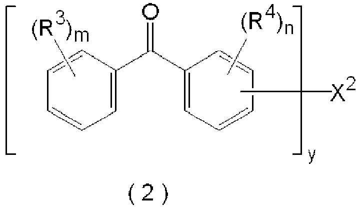

(In the formula (2), R³ and R⁴ each independently represent an alkyl group having 1 to 5 carbon atoms or a halogen atom, m represents an integer of 0 to 4, n represents an integer of 0 to 3, y represents an integer of 2 to 4, when m and n are integers of 2 or more, R³ and R⁴, which are present as a plurality, may be the same as or different from each other, and X² represents a y-valent hydrocarbon chain having 2 to 300 carbon atoms, which may contain an ether bond and/or an ester bond.)

In the formula (2), R³ and R⁴ each independently represent an alkyl group having 1 to 5 carbon atoms or a halogen atom, and the alkyl group having 1 to 5 carbon atoms may be any of linear, branched, or cyclic, but it is preferably linear or branched. Further, R³ and R⁴ each preferably an alkyl group having 1 to 4 carbon atoms, more preferably an alkyl group having 2 to 3 carbon atoms, and still more preferably an ethyl group or an isopropyl group. Examples of the halogen atom include a fluorine atom, a chlorine atom, a bromine atom, and an iodine atom, and preferably a chlorine atom. R³ and R⁴ are particularly preferably an ethyl group, an isopropyl group, or a chlorine atom.

In the formula (2), m is preferably an integer of 0 to 4, more preferably 0 to 2, and still more preferably 0 or 1. In the case where m is an integer of 2 or more, R³'s, which are present as a plurality, may be the same as or different from each other.

In the formula (2), n represents an integer of 0 to 3, preferably 0 to 2, more preferably 0 or 1, and still more preferably 0. In the case where n is an integer of 2 or more, R⁴'s, which are present as a plurality, may be the same as or different from each other.

In the formula (2), y is preferably an integer of 2 to 4, more preferably 2 or 3, and still more preferably 2.

In the formula (2), X¹ represents an x-valent linking group including an x-valent hydrocarbon chain having 2 to 300 carbon atoms, which may contain an ether bond (-O-) and/or an ester bond (-(C=O)-O-).

Further, in the formula (2), there are a plurality (y) of benzophenone structures (in the formula (2), structures represented in "[ ]") excluding X² which is a linking group, but these may be the same as or different from each otehr, and are not particularly limited. From the viewpoint of synthesis, the structures are preferably the same.

In the compound represented by the formula (2), the substitution position on the benzophenone is set to be represented as follows.

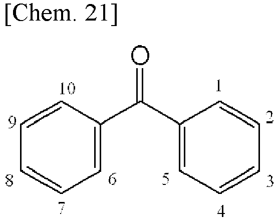

The substitution position of X¹ is the first to the fourth position, and the second position, the third position, or the fourth position is preferable, the second position or the fourth position is more preferable, and the fourth position is still more preferable.

The substitution position of R¹ is the fifth to the eighth position, the sixth position and the seventh position are preferable, and the sixth position is more preferable.

In addition, the substitution position of R² is the first to the fourth position, the first position, the second position, and the third position are preferable, and the first position is more preferable.

The compound represented by the formula (2) is preferably a compound represented by the following formula (2').

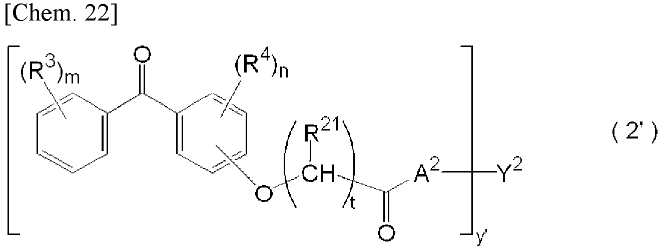

In the formula (2'), R³, R⁴, m, and n have the same meanings as R³, R⁴, m, and n in the formula (2), and the preferable ranges thereof are also the same.

In the formula (2'), R²¹'s each independently represent a hydrogen atom or an alkyl group having 1 to 4 carbon atoms, and it is preferably a hydrogen atom, a methyl group, or an ethyl group, and more preferably a hydrogen atom.

In the formula (2'), t's each independently represent an integer of 1 to 6, and it is preferably an integer of 1 to 3, more preferably 1 or 2, and still more preferably 1. In addition, when t is 2 or more, R²¹'s, which are present as a plurality, may be the same as or different from each other.

y' represents an integer of 2 to 4, preferably 2 or 3, and more preferably 2.

Y² represents a residue where hydrogen atoms of y' hydroxy groups are removed from polyhydroxy compounds which have at least y' hydroxy groups, and a residue where hydrogen atoms of all (y') the hydroxy groups are removed from polyhydroxy compounds which have y' hydroxy groups is preferable. Specifically, a residue where the hydrogen atoms of x' hydroxy groups are removed from polyhydroxy compounds selected from the group consisting of ethylene glycol, propylene glycol, butylene glycol, glycerin, trimethylol propane, ditrimethylolpropane, and pentaerythritol is preferable, and additionally, a residue where the hydrogen atoms of all the hydroxy groups are removed is preferable.

In the formula (2'), A² represents a group selected from the group consisting of the following (i) to (iii).
[Chem. 23]

* -[O(CHR¹²CHR¹³)ₐ]_{d}-** (i)

* -[O(CH₂)_{b}CO]_{d}- ** (ii)

*-[O(CH₂)_{b}CO]_{(d-1)}-[O(CHR₁₂CHR¹³)ₐ]-** (iii)

(In the formulae (i) to (iii), either one of R¹² and R¹³ represents a hydrogen atom and the other represents a hydrogen atom, a methyl group, or an ethyl group, a represents an integer of 1 or 2, b represents an integer of 4 or 5, and d represents an integer of 1 to 20. Further, * represents the bonding position with the carbonyl carbon and ** represents the bonding position with Y².)

A² is preferably a group represented by the formula (i), and more preferably *-(OCH₂CH₂)_{d}-**,*-(OCH₂CH₂CH₂CH₂)_{d}-**, or *-O(CH(CH₃)CH₂)d-**. In this case, d is more preferably an integer of 3 to 10.

The molecular weight of the component B-4 is preferably from 500 to 3,000, more preferably 800 to 2,500, and still more preferably 1,000 to 2,000.

If the molecular weight is 500 or more, the elution of the compound from the cured film is suppressed and it is possible to obtain an ink composition having suppressed migration, odor, and blocking. On the other hand, if the molecular weight is 3,000 or less, the steric hindrance of the molecule is small and further, the degree of freedom in the liquid/film of the molecule is maintained and it is possible to obtain a high sensitivity.

Further, in the case where the component B-4 is a mixture of a plurality of compounds where the numbers of carbon atoms and the like are different, the weight average molecular weight is preferably in the range above. In addition, the weight average molecular weight of the component B-4 can be measured by the same method as the component B-3.

Specific examples of the component B-4 are shown below, but the present invention is not limited to the following compounds.

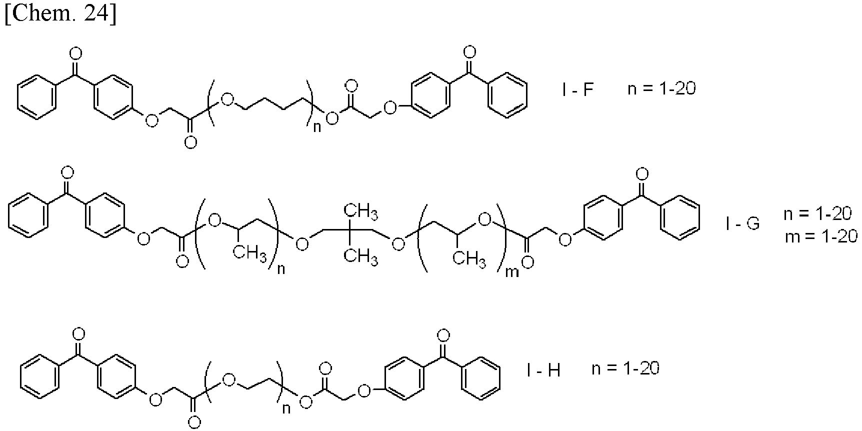

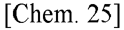

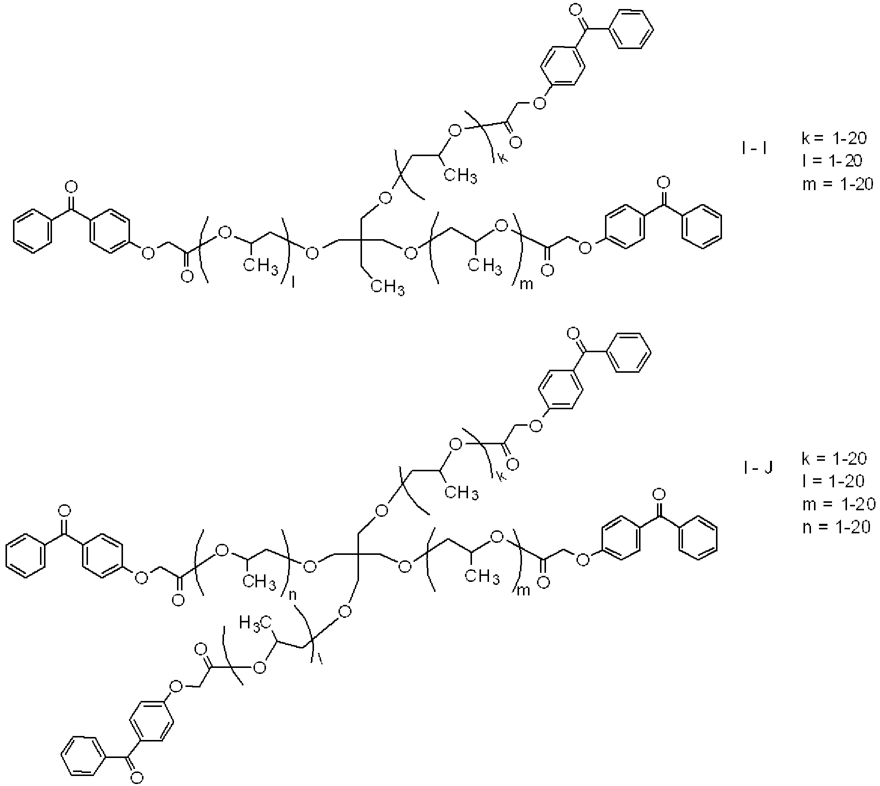

As the compound which is represented by the formula (2), commercially available compounds can be used. Specific examples thereof include Omnipol BP (Polybutylene glycol bis(4-benzoylphenoxy)acetate, CAS No. 515136-48-8).

The compound represented by the formula (2) can be prepared by a known reaction and is not particularly limited, but for example, the compound represented by the formula (2') can be prepared by reacting a compound represented by the following formula (2-1) and a compound represented by the following formula (2-2).

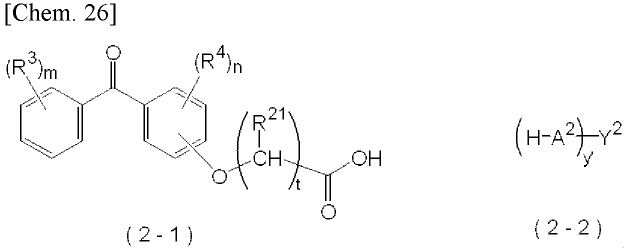

(In the formulae (2-1) and (2-2), R³, R⁴, R²¹, A², Y², m, n, t, and y' have the same meanings as in the formula (2') and the preferable ranges thereof are also the same.)

The above-described reaction is preferably performed in the presence of a solvent and examples of suitable solvents include aromatic hydrocarbons such as benzene, toluene, and xylene.

In addition, the reaction is preferably carried out in the presence of a catalyst, and examples of the catalyst include sulfonic acid (for example, p-toluene sulfonic acid, and methane sulfonic acid), inorganic acids (for example, sulfuric acid, hydrochloric acid, and phosphoric acid), and Lewis acids (aluminum chloride, boron trifluoride, and organotitanates).

The reaction temperature and reaction time are not particularly limited.

After the completion of the reaction, it is possible to separate the product by isolation the reaction mixture using known means, washing if desired, and carrying out drying.

In the present invention, at least one selected from the group consisting of a component B-1 to a component B-4 is contained as the (component B) polymerization initiator. As the component B, at least the component B-3 and/or the component B-4 is preferably contained, and the component B-3 and/or the component B-4, and the component B-1 and/or the component B-2 are more preferably contained. That is, a combination of at least one selected from the group consisting of the component B-3 and the component B-4, and at least one selected from the group consisting of the component B-1 and the component B-2 is preferably used.

Among these, the component B-3 is preferably contained, and the component B-3 and the component B-1 are particularly preferably contained.

The total content of the component B-3 and the component B-4 is preferably from 1% by mass to 5% by mass, and more preferably from 2% by mass to 4% by mass of the total ink composition, from the viewpoints of attaining high sensitivity, and suppressing migration, odor and blocking.

The total content of the component B-1 and the component B-2 is preferably from 1% by mass to 5% by mass, and more preferably from 2% by mass to 4% by mass of the total ink composition.

Moreover, the total content of the component B-1 to the component B-4 is preferably from 0.3% by mass to 5.0% by mass, and more preferably from 0.5% by mass to 2.5% by mass of the total ink composition. Within the ranges above, the curability is excellent, which is thus preferable.

### (Component B-5) Other Polymerization Initiators

In the present invention, the ink composition may contain (component B-5) other polymerization initiators, in addition to the component B-1 to the component B-4.

Further, among the other polymerization initiators, particularly from the viewpoint of suppressing migration, odor, and blocking, a polymerization initiator having a molecular weight of less than 340 is preferably not contained in the ink composition or contained at a content of 1% by mass or less of the total ink composition; a polymerization initiator having a molecular weight of less than 340 is more preferably not contained or contained at a content of 0.5% by mass or less of the total ink composition; or a polymerization initiator having a molecular weight of less than 340 is most preferably not contained or contained at a content of 0.3% by mass or less of the total ink composition.

The ink composition of the present invention preferably contains a compound represented by the formula (3) as another polymerization initiator. It is presumed that by adding the compound represented by the formula (3), the compound represented by the formula (3) donates a hydrogen atom and functions as a coinitiator, and thus, the sensitivity is improved. Particularly, it is presumed that by donating a hydrogen atom to the compound represented by the formula (1) or (2) in the excited state, high sensitivity is attained. Further, as compared with a case of using a low molecular amine compound, migration and odor are suppressed by using the compound represented by the formula (3).

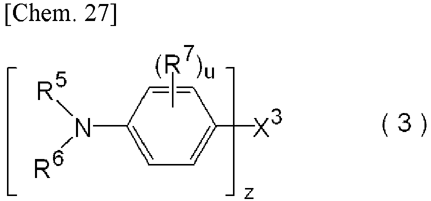

(In the formula (3), R⁵, R⁶, and R⁷ each independently represent a hydrogen atom, an alkyl group having 1 to 5 carbon atoms, z represents an integer of 2 to 4, u represents 4, and X³ represents a z-valent hydrocarbon chain having 2 to 300 carbon atoms which may include an ether bond and/or an ester bond.)

In the formula (3), R⁵ and R⁶ each independently represent an alkyl group having 1 to 5 carbon atoms or a halogen atom, and the alkyl group having 1 to 5 carbon atoms may be any of linear, branched, or cyclic, but it is preferably linear or branched. Further, the alkyl group having 1 to 5 carbon atoms is preferably an alkyl group having 1 to 4 carbon atoms, more preferably a methyl group or an ethyl group, and most preferably a methyl group.

In the formula (3), R⁷'s each independently represent a hydrogen atom, an alkyl group having 1 to 5 carbon atoms, and the alkyl group having 1 to 5 carbon atoms may be any of linear, branched, or cyclic, but it is preferably linear or branched. Further, R⁷'s are each preferably an alkyl group having 1 to 4 carbon atoms, more preferably an alkyl group having 1 to 2 carbon atoms, and most preferably a methyl group. Among these, the number of R⁷'s that are hydrogen atoms is preferably 2 or more, more preferably 3, and still more preferably 4.

In the formula (3), z represents an integer of 2 to 4, more preferably 2 or 3, and still more preferably 2.

In the formula (3), X³ represents a z-valent linking group including a z-valent hydrocarbon chain having 2 to 300 carbon atoms, which may contain an ether bond (-O-) and/or an ester bond (-(C=O)-O-).

Further, in the formula (3), there are a plurality (z) of thioxanthone structures (in the formula (3), structures represented in "[ ]") excluding X³ which is a linking group, but these may be the same as or different from each otehr, and are not particularly limited. From the viewpoint of synthesis, the structures are preferably the same.

The compound represented by the formula (3) is preferably a compound represented by the following formula (3').

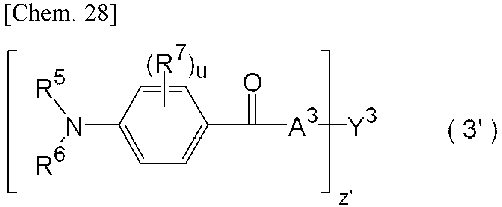

In the formula (3'), R⁵ to R⁷, and u have the same meanings as R⁵ to R⁷, and u in the formula (3), and the preferable ranges thereof are also the same.

z' represents an integer of 2 to 4, preferably 2 or 3, and more preferably 2.

Y³ represents a residue where hydrogen atoms of z' hydroxy groups are removed from polyhydroxy compounds which have a single bond, an ether bond, or at least z' hydroxy groups, and a residue where hydrogen atoms of all (z') the hydroxy groups are removed from polyhydroxy compounds which have z' hydroxy groups is preferable. Specifically, a residue where the hydrogen atoms of z' hydroxy groups are removed from polyhydroxy compounds selected from the group consisting of ethylene glycol, propylene glycol, butylene glycol, glycerin, trimethylol propane, ditrimethylolpropane, and pentaerythritol is preferable, and additionally, a residue where the hydrogen atoms of all the hydroxy groups are removed is more preferable.

In the formula (3'), A³ represents a group selected from the group consisting of the following (i) to (iii).
[Chem. 29]

* -[O(CHR¹²CHR¹³)ₐ]_{d}-** (i)

*-[O(CH₂)_{b}CO]_{d}-** (ii)

*-[O(CH₂)_{b}CO]_{(d-1)}-[O(CHR¹²CHR¹³)ₐ]-** (iii)

(In the formulae (i) to (iii), either one of R¹² and R¹³ represents a hydrogen atom and the other represents a hydrogen atom, a methyl group, or an ethyl group, a represents an integer of 1 or 2, b represents an integer of 4 or 5, and d represents an integer of 1 to 20. Further, * represents the bonding position with the carbonyl carbon and ** represents the bonding position with Y³. Further, in at least one of z' A³'s, d represents an integer of 1 to 20.)

A³ is preferably a group represented by the formula (i), and more preferably *-(OCH₂CH₂)₂-**,*-(OCH₂CH₂CH₂CH₂)_{z}-**, or *-O(CH(CH₃)CH₂)_{z}-**. In this case, z is more preferably an integer of 3 to 10.

The molecular weight of the compound represented by the formula (3) is preferably from 500 to 3,000, more preferably 800 to 2,500, and still more preferably 1,000 to 2,000.

If the molecular weight is 500 or more, the elution of the compound from the cured film is suppressed and it is possible to obtain an ink composition having suppressed migration, odor, and blocking. On the other hand, if the molecular weight is 3,000 or less, the steric hindrance of the molecule is small and further, the degree of freedom in the liquid/film of the molecule is maintained and it is possible to obtain a high sensitivity.

Further, in the case where the compound represented by the formula (3) is a mixture of a plurality of compounds where the numbers of carbon atoms and the like are different, the weight average molecular weight is preferably in the range above.

Specific examples of the compound represented by the formula (3) are shown below, but the present invention is not limited to the following compounds.

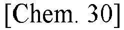

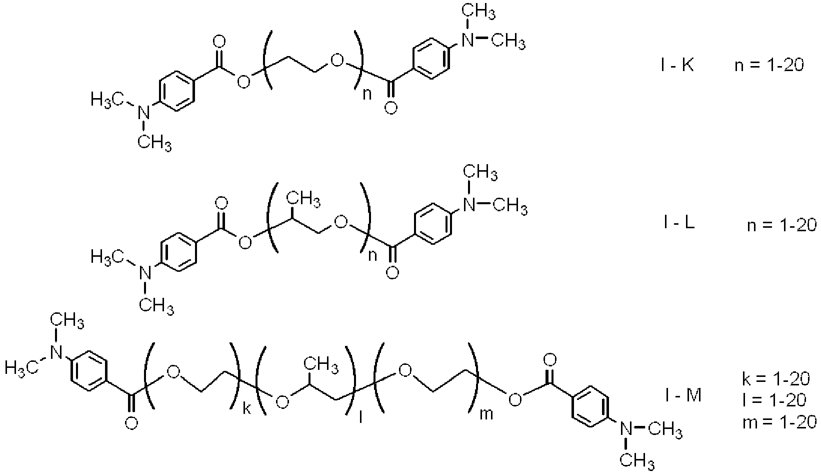

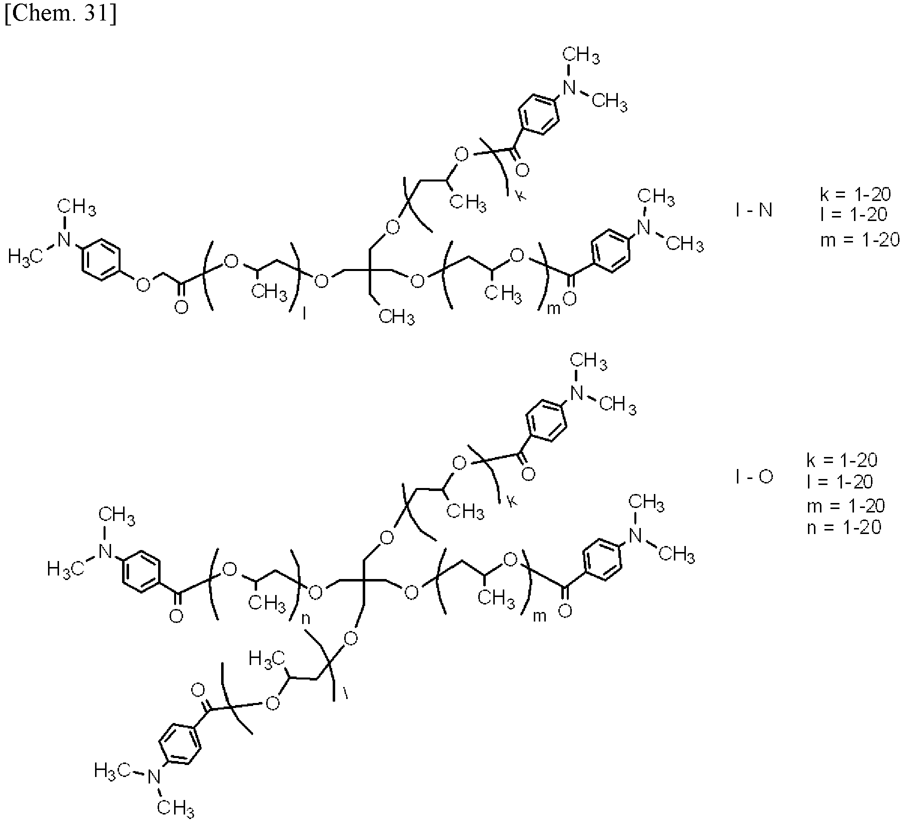

As the compound which is represented by the formula (3), commercially available compounds can be used. Specific examples thereof include Speedcure 7040 (manufactured by Lambson Co., Ltd.).

The method for synthesizing the compound represented by the formula (3) is not particularly limited, but for example, a compound represented by the formula (I-K) is obtained by subjecting p-dimethylaminobenzoic chloride and polyethylene glycol to a hydrogen chloride removing reaction (de-HCl reaction) and neutralization with a base.

The compounds represented by the formula (3) may be used singly or in combination of two or more kinds thereof.

Further, the content of the compound represented by the formula (3) is preferably from 1.0% by mass to 15.0% by mass, more preferably from 2.0% by mass to 10.0% by mass, and still more preferably from 2.0% by mass to 6.0% by mass of the total ink composition. Within the ranges above, the curability is excellent.

Examples of other polymerization initiators include Speedcure ITX, LUCIRIN TPO, IRGACURE 184, and IRGACURE 907, all manufactured by BASF Japan Co., Ltd.

The ink composition of the present invention may contain a compound which functions as a sensitizer (which is hereinafter also simply referred to as a "sensitizer") as a polymerization initiator, in order to promote the decomposition of the polymerization initiator by absorbing specific active rays.

Examples of the sensitizer include polynuclear aromatics (for example, pyrene, perylene, triphenylene, and 2-ethyl-9,10-dimethoxy-anthracene), xanthenes (for example, fluorescein, eosin, erythrosine, rhodamine B, and rose bengal), cyanines (for example, thiacarbocyanine and oxacarbocyanine), merocyanines (for example, merocyanine and carbo merocyanine), thiazine type (for example, thionine, methylene blue, and toluidine blue), acridines (for example, acridine orange, chloro flavin, and acriflavine), anthraquinones (for example, anthraquinone), squarylium (for example, squarylium), and coumarins (for example, 7-diethylamino-4-methyl coumarin).

In addition, the sensitizers may be used singly or in combination of two or more kinds thereof.

The total content of the polymerization initiator (component B) combined with the other polymerization initiators is preferably from 1% by mass to 15.0% by mass, more preferably 2.0% by mass to 10.0% by mass, and still more preferably 2.5% by mass to 7.0% by mass of the total ink composition. Within the ranges above, the curability is excellent.

### (Component C) Surfactant

A surfactant may be added to the ink composition of the present invention in order to impart long-term discharging stability.

Examples of the surfactant include surfactants described in each publication of JP1987-173463 (JP-S62-173463), and JP1987-183457 (JP-S62-183457). Examples thereof include anionic surfactants such as a dialkyl sulfosuccinate salt, an alkyl naphthalene sulfonic acid salt, and a fatty acid salt; non-ionic surfactants such as a polyoxyethylene alkyl ether, a polyoxyethylene alkyl allyl ether, an acetylene glycol, and a polyoxyethylene-polyoxypropylene block copolymer; and cationic surfactants such as an alkyl amine salt and a quaternary ammonium salt. In addition, an organic fluoro compound may be used instead of the above-described surfactant. The organic fluoro compounds are preferably hydrophobic. The organic fluoro compounds include fluorine-based surfactants, oily fluorine-containing compounds (for example, a fluorine based oil) and solid fluorine compound resins (for example, a tetrafluoroethylene resin), and examples thereof include those described in each publication of JP1982-9053B (JP-S57-9053B) (columns 8 to 17), and JP1987-135826 (JP-S62-135826).

The content of the surfactant in the ink composition of the present invention is appropriately selected according to the intended purpose, but it is preferably from 0.0001% by mass to 1% by mass with respect to the total ink composition is preferable.

### (Component D) Colorant

The ink composition of the present invention preferably contains a colorant in order to improve the visibility of the formed image portion. The colorant is not particularly limited, but pigment with rich color reproduction and pigments which are oil-soluble, which have excellent weather resistance, are preferable, and it is possible to use a colorant which is arbitrarily selected from known soluble pigments. For the colorant, a compound which does not function as the polymerization inhibitor is preferably selected from the viewpoint of not decreasing the sensitivity of the curing reaction due to the active rays.

The pigments which can be used in the present invention are not particularly limited, but for example, the following numbered organic or inorganic pigments as described in the color index can be used.

As red or magenta pigments, according to the purpose it is possible to use Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, Pigment Orange 13, 16, 20, 36, as blue or cyan pigments, Pigment Blue 1, 15, 15:1, 15:2, 15:3, 15:4, 15:6, 16, 17-1, 22, 27, 28, 29, 36, and 60, as a green pigment, Pigment Green 7, 26, 36, and 50, as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193, as a black pigment, Pigment Black 7, 28, and 26, and as a white pigment, pigment white 6, 18, and 21.

In the present invention, it is also possible to use a dispersed pigment in a range which dissolves in a water-immiscible organic solvent. The dispersed pigment generally includes water-soluble pigments, but in the present invention, it is preferably used in a range which dissolves in a water-immiscible organic solvent.

Preferable specific examples of disperse dyes include C. I. Disperse Yellow 5, 42, 54, 64, 79, 82, 83, 93, 99, 100, 119, 122, 124, 126, 160, 184:1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C. I. Disperse Green 6:1 and 9.

After adding the colorant to the ink composition, the colorant is preferably appropriately dispersed inside the ink composition. For the dispersion of the colorant, it is possible to use various dispersion devices such as a ball mill, a sand mill, an attritor, a roll mill, an agitator, a Henschel mixer, a colloid mill, an ultrasonic homogenizer, a pearl mill, a wet jet mill, and a paint shaker.

The colorant is directly added along with each component in the preparation of the ink composition. In addition, in order to improve dispersibility, it is possible to perform blending after adding in advance to the solvent or the dispersion medium such as the polymerizable compound used in the present invention and carrying out uniform dispersion or dissolution.

In the present invention, in order to avoid the problems of deterioration of the solvent resistance in the case where the solvent remains in the cured image and of volatile organic compounds (VOC) of the remaining solvent, the colorant is preferably added and blended in advance in a dispersion medium such as a polymerizable compound. Further, in the case where only the viewpoint of the dispersion suitability is considered, a low viscosity monomer is preferably selected as the polymerizable compound which is used in the adding of the colorant. The colorant may be appropriately selected and used as one kind or two or more kinds according to the intended purpose of the ink composition.

Moreover, when a colorant such as a pigment which is present as a solid in the ink composition is used, the selection of the colorant, the dispersant, and the dispersion medium, and the dispersion conditions and filter conditions are preferably set such that the average particle diameter of the colorant particles is from 0.005 µm to 0.5 µm, more preferably from 0.01 µm to 0.45 µm, and still more preferably from 0.015 µm to 0.4 µm. The particle diameter management is preferable since the clogging of the head nozzle is suppressed, and it is possible to maintain the storage stability, the transparency, and curing sensitivity of the ink composition.

The content of the colorant in the ink composition is appropriately selected according to the color and intended purpose, but the content is preferably from 0.01% by mass to 30% by mass with respect to the total mass of the ink composition.

### (Component E) Dispersant

The ink composition of the present invention preferably contains a dispersant. In particular, in the case of using a pigment, the dispersant is preferably contained in order to stably disperse the pigment in the ink composition. A polymer dispersant is preferable as the dispersant. Further, the "polymer dispersant" in the present invention means a dispersant having a weight average molecular weight of 1,000 or more.

Examples of the polymer dispersant include DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie Co., Ltd.); EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, EFKA7580 (manufactured by EFKA Additives Co., Ltd.); Disperse Aid 6, Disperse Aid 8, Disperse Aid 15, Disperse Aid 9100 (manufactured by San Nopco Co., Ltd.); various SOLSPERSE dispersants such as SOLSPERSE 3000, 5000, 9000, 12000, 13240, 13940, 17000, 22000, 24000, 26000, 28000, 32000, 36000, 39000, 41000, 71000 (manufactured by Noveon, Inc.); Adeka Pluronic L31, F38, L42, L44, L61, L64, F68, L72, P95, F77, P84, F87, P94, L101, P103, F108, L121, P-123 (manufactured by ADEKA Ltd.), Ionetto S-20 (Sanyo Chemical Industries, Ltd.); and Disparlon KS-860, 873SN, 874 (polymer dispersant), # 2150 (aliphatic polycarboxylic acid), and # 7004 (polyether ester type) (Kusumoto Kasei Co., Ltd.).

The content of the dispersant in the ink composition is appropriately selected according to the intended purpose, but the content is preferably from 0.05% by mass to 15% by mass with respect to the total mass of the ink composition.

### <Other Components>

The ink composition of the present invention includes, if desired, an ultraviolet absorber, an antioxidant, an anti-fading agent, conductive salts, solvents, a polymer compound, a basic compound, or the like, in addition to each of the components. It is possible to use known components as these other components, and examples thereof include those described in JP2009-221416A.

In addition, the ink composition of the present invention preferably contains a polymerization inhibitor from the points of view of storability and suppressing head clogging.

The content of the polymerization inhibitor is preferably from 200 ppm to 20,000 ppm with respect to the total mass of the ink composition of the present invention.

Examples of the polymerization inhibitor include nitroso-based polymerization inhibitors, hindered amine-based polymerization inhibitors, hydroquinone, benzoquinone, p-methoxyphenol, TEMPO, TEMPOL, and Cuperon Al.

### <Physical Properties of Ink>

In the present invention, it is preferable to use an ink composition having a viscosity at 25°C of 40 mPa·s or less, taking dischargibility into consideration. The viscosity is more preferably from 5 mPa·s to 40 mPa·s, and still more preferably from 7 mPa·s to 30 mPa·s. In addition, the viscosity at the discharge temperature (preferably 25°C to 80°C, and more preferably 25°C to 50°C) is preferably from 3 mPa·s to 15 mPa·s, and more preferably from 3 mPa·s to 13 mPa·s. The ink composition of the present invention is preferably adjusted to a suitable composition ratio in order that the viscosity is in the ranges above. By setting a high viscosity at room temperature (25°C), even in the case where a porous recording medium (support) is used, the penetration of the ink composition into the recording medium can be avoided and the uncured monomers can be reduced. Further, ink blurring at the time of ink droplet landing of the ink composition can be inhibited, and as a result, the image quality is improved, which is preferable.

The surface tension of the ink composition of the present invention at 25°C is preferably from 20 nN/m to 40 nN/m, more preferably from 20.5 nN/m to 35.0 nN/m, still more preferably from 21 nN/m to 30.0 nN/m, and particularly preferably from 21.5 nN/m to 28.0 nN/m. Within the ranges above, a printed matter having excellent blocking resistance is obtained.

Incidentally, it is possible to use a known method as the measurement method of the surface tension of the ink composition at a temperature of 25°C, but the measurement is preferably carried out using a wheel suspension method or a Wilhelmy method. Preferable examples of the method include a method in which the measurement is carried out using an automatic surface tension meter CBVP-Z manufactured by Kyowa Interface Science Co., Ltd., or a method in which measurement is performed using SIGMA702 manufactured by KSV Instruments Ltd.

### (Ink Jet Recording Method, Ink Jet Recording Apparatus, and Printed Matter)

The ink jet recording method of the present invention is a method in which the ink composition for ink jet of the present invention is discharged onto a recording medium (a support, a recording material, or the like) set for ink jet use, active energy rays are emitted under a low oxygen partial pressure onto the ink jet ink composition which was discharged onto the recording medium, and an image is formed by curing the ink jet ink composition.

More specifically, the ink jet recording method of the present invention preferably includes (step a) a step of discharging an ink composition onto a support (which is also hereinafter referred to as a recording medium), and (step b) a step of irradiating active rays in the ink composition at an oxygen partial pressure of 0.15 atm or less to cure the ink composition.

The ink jet recording method of the present invention forms an image on the recording medium using the cured ink composition by including the (step a) and the (step b).

In addition, the ink jet recording method of the present invention may be carried out by carrying out the (step a) and the (step b) two times or more, that is, in a multi-pass mode where the same parts are printed by overprinting thereon. By using the ink composition of the present invention, an image having excellent glossiness is obtained in the case of performing printing by a multi-pass mode.

In addition, the printed matter of the present invention is a printed matter which is recorded by the ink jet recording method of the present invention.

Here, as the support, a resin film having a film thickness of 10 µm to 90 µm and containing at least one component material selected from the group consisting of polyethylene terephthalate, polyethylene, polypropylene, and nylon is used.

In addition, the ink composition used in the present invention is suitable for package printing, in particular, for package printing for food packages.

In the (step a) of the ink jet recording method of the present invention, the ink jet recording apparatus which will be described in detail below can be used.

### <Ink jet Recording Apparatus>

The ink jet recording apparatus which can be used in the ink jet recording method of the present invention is not particularly limited and a well-known ink jet recording apparatus capable of achieving the desired resolution can be arbitrarily selected and used. That is, with known ink jet recording apparatuses including commercially available products, discharge of the ink composition onto the support in the ink jet recording method (step a) of the present invention can be carried out.

Examples of the ink jet recording apparatus which can be used in the present invention include apparatuses including, for example, an ink supply system, a temperature sensor, and an active energy ray source.

The ink supply system is formed of, for example, a source tank including the ink composition of the present invention, a supply pipe, an ink supply tank immediately before the ink jet head, a filter and a piezo-type ink jet head. The piezo-type ink jet head is capable of driving so as to be able to eject multi-size dots of preferably 1 pl to 100 pl and more preferably 8 pl to 30 pl, at a resolution of preferably 320 × 320 dpi to 4,000 × 4,000 dpi, more preferably 400 × 400 dpi to 1,600 × 1,600 dpi, and still more preferably 720 × 720 dpi. Further, the dpi in the present invention represents the number of dots per 2.54 cm.

In the ink composition of the present invention, it is preferable that the temperature of the discharged ink composition be kept to be constant. Accordingly, it is preferable that means for stabilizing the ink composition temperature be provided in the ink jet recording apparatus. The piping system from the ink tank (the intermediary tank in the case where there is an intermediary tank) to the nozzle emission surface and all of the members are sites to be set to a constant temperature. That is, insulation and heating can be carried out from the ink supply tank to the ink jet head portion.

The temperature control method is not particularly limited, but for example, it is preferable to provide a plurality of temperature sensors in sites at each pipe, and perform heating control according to the flow amount of the ink composition and the temperature of the environment. The temperature sensors can be provided in the vicinity of the nozzles of the ink supply tank and the ink jet head. In addition, the head unit to be heated is preferably thermally blocked or insulated in order that the apparatus main body is not influenced by the temperature from the outside air. In order to shorten the start-up time of the printer required for heating, or in order to reduce the thermal energy loss, it is preferable to provide insulation from other sites and to decrease the heat capacity of the entire body of the heating unit.

Active ray-curable ink compositions such as the ink composition used in the present invention have large changes in viscosity due to temperature changes during discharging since the viscosity is generally higher than aqueous ink compositions which are used in ink compositions for normal ink jet recording. The changes in the viscosity of the ink composition are greatly influenced by the changes in the droplet size and the changes in the droplet discharge speed, and can lead to deterioration of the image quality. Accordingly, there is a need to keep the temperature of the ink composition at the time of discharging constant as much as possible. Thus, in the present invention, it is suitable that the control band of the temperature of the ink composition be preferably ±5°C from a set temperature, more preferably ±2°C from a set temperature, and still more preferably ±1°C from a set temperature.

Next, the (step b) will be described.

The ink composition which is discharged onto the recording medium is cured by the irradiation of active rays. This is because the radical polymerization initiator included in the ink composition is dissolved by the irradiation of the active rays, the polymerization initiating species such as a radical, or the like is generated, and the polymerization reaction of the polymerizable compound is started and promoted by the functions of the initiating species. At this time, if a polymerization initiator and a sensitizer are present in the ink composition, the sensitizer in the system absorbs active rays and enters an excited state, the dissolution of the polymerization initiator is promoted by the contact with the polymerization initiator, and a curing reaction of higher sensitivity can be achieved.

As the active rays used herein, α rays, γ rays, electron beams, X-rays, ultraviolet rays, visible light, infrared light, or the like can be used. The peak wavelength of the active rays depend on the absorption characteristics of the sensitizer, but for example, 200 nm to 600 nm is preferable, 300 nm to 450 nm is more preferable, 320 nm to 420 nm is still more preferable, and active rays which are ultraviolet rays where the peak wavelength is in a range of 340 nm to 400 nm are particularly preferable.

In addition, the polymerization initiation system of the ink composition of the present invention preferably has sufficient sensitivity even with low output active rays. The curing is suitably performed with the exposed surface illuminance in the ink jet recording method of the present invention preferably at 10 mW/cm² to 4,000 mW/cm², and more preferably at 20 mW/cm² to 2,500 mW/cm².

As the active ray source, a mercury lamp, a gas or solid-state laser, or the like is mainly used, and as the light source used in the curing of the ink composition for ultraviolet ray photocurable ink jet recording, mercury lamps and metal halide lamps are widely known. However, currently, a move toward becoming mercury free is strongly desirable from the viewpoint of protecting the environment and replacement with GaN-based semiconductor ultraviolet light-emitting devices is extremely effective, both industrially and environmentally. In addition, LED (UV-LED) and LD (UV-LD) are compact, have a long life, high efficiency, and low cost and are anticipated as light sources for photocurable ink jets.

Further, light emitting diodes (LED) and laser diodes (LD) can be used as active ray sources. In particular, in the case where an ultraviolet source is required, an ultraviolet LED and an ultraviolet LD can be used. For example, Nichia Corporation has launched a violet LED having a wavelength in which the main emission spectrum is between 365 nm and 420 nm. Furthermore, in the case where an even shorter wavelength is necessary, the specification of US6,084,250A discloses an LED capable of emitting active rays placed in the center between 300 nm and 370 nm. In addition, other ultraviolet LEDs are available and can irradiate active rays of different ultraviolet ray bands. In the present invention, UV-LEDs are particularly preferable active ray sources, and a UV-LED having a peak wavelength in 340 nm to 400 nm is particularly preferable.

In addition, the maximum illuminance of the LED on the recording medium is preferably from 10 mW/cm² to 2,000 mW/cm², more preferably from 20 mW/cm² to 1,000 mW/cm², and particularly preferably from 50 mW/cm² to 800 mW/cm².

The ink composition of the present invention is suitably irradiated by such active energy rays for preferably 0.01 seconds to 120 seconds and more preferably 0.1 seconds to 90 seconds.

The irradiation conditions of the active energy rays and the basic irradiation method are disclosed in JP1985-132767A (JP-S60-132767A). More specifically, light sources are provided on both sides of the head unit including the ejection apparatus of the ink composition and are operated by scanning the head unit and the light sources using a so-called shuttle system. The irradiation of the active energy rays is performed in a fixed time (preferably 0.01 seconds to 0.5 seconds, more preferably 0.01 seconds to 0.3 seconds, and still more preferably 0.01 seconds to 0.15 seconds) after the landing of the ink composition. By controlling the time from the landing of the ink composition to the irradiation in this manner to be an extremely short time, the ink composition landed on the recording medium can be prevented from blurring before curing. In addition, since exposure can be carried out before the ink composition penetrates to a deep portion where the light source does not reach even with respect to a porous recording medium, the residue of the unreacted monomer can be suppressed, which is preferable.

Furthermore, the curing may be completed by another light source unaccompanied by driving. Further, examples of the irradiation method include a method using optical fiber and a method in which a collimated light (UV light) is emitted onto a mirror surface provided on a head unit side surface, and a recorded area is irradiated with reflected light. These curing methods can also be applied to the ink jet recording method of the present invention.

In addition, in the present invention, during the irradiation of the active rays, the atmosphere of the periphery of the surface of the recording medium is set to a poor oxygen atmosphere. It is known that it is possible to reduce the energy of the active rays which is necessary for the curing by suppressing the oxygen concentration in the curing atmosphere, but in the present invention, it was found to be effective for improving the migration, odor, and shrinkage, which are important characteristics for printed matters for packages.

Generally, the surface of a radical polymer-based ink composition which comes into contact with air is easily affected by oxygen polymerization inhibition and in particular, curing defects are easily generated in the surface. The monomer may remain in the film due to the deterioration of the surface curability or the performance of keeping the low molecular weight component in the film and may be insufficient due to forming the crosslinked structure of the film using a polyfunctional monomer, whereby the migration and the odor are remarkably deteriorated. However, by carrying out exposure in an environment with a low oxygen concentration, it is presumed that the degree of the oxygen polymerization inhibition is reduced and the migration and the odor are improved.

In addition, for only a selectively cured film surface, oxygen polymerization inhibition is realized, and thus, a difference in curability with the inside of a film providing good curability, and a distribution in the volume shrinkage rate occurs. As a result, a printed matter having a thin support for packages is easily shrunken. As for this, it is presumed that by exposure under a low oxygen concentration environment, the volume shrinkage rates of the film surface and the inner volume are rendered to be uniform, and thus, the shrinkage can be improved.

In the present invention, the irradiation of the active rays is carried out under a poor oxygen atmosphere where the oxygen partial pressure is 0.15 atm or less. In detail, this is as follows.

Usually, since the partial pressure of the oxygen under the atmosphere (one atmospheric pressure) is 0.21 atm (atmospheric pressure), in order to reduce the partial pressure of the oxygen to 0.15 atm or less, it is possible to (a) reduce the pressure of the atmosphere to 0.71 atm or less during the exposure, or (b) blend gases other than oxygen (for example, inert gases such as nitrogen and argon) with air to have 40% by volume or more with respect to the air.

For the poor oxygen atmosphere in the present invention, it is possible to use any method without being particularly limited.

The oxygen partial pressure is 0.15 atm or less, preferably 0.10 atm or less, more preferably 0.08 atm or less, and particularly preferably 0.05 atm or less.

The lower limit of the oxygen partial pressure is not particularly limited. However, it is possible to set the oxygen partial pressure to virtually zero by substituting the vacuum or the atmosphere with a gas (for example, nitrogen) other than air, which is also a preferable method.

The oxygen concentration by the inert gas substitution is preferably controlled to be 0.1% to 15% (further, at this time, the oxygen partial pressure is controlled to 0.001 atm to 0.15 atm), and more preferably controlled to be 0.1% to 10%.

As a means for controlling the oxygen concentration of the curing atmosphere to 0.1% to 15%, for example, there are methods and the like of setting a nitrogen atmosphere or a carbon dioxide atmosphere with a system where the image forming apparatus is closed. As a means for supplying nitrogen, for example, there are methods of using an apparatus which separates only nitrogen gas from the air using the differences in permeability of nitrogen and oxygen with respect to a hollow fiber membrane using a nitrogen cylinder. There is a supply method using a cylinder as the means for supplying carbon dioxide.

The inert gases refer to common gases such as N₂, H₂, and CO₂, and rare gases such as He, Ne, and Ar. Among these, for the reasons of safety, ease of availability, and cost, N₂ is suitably used.

The "under reduced pressure" represents a state of 500 hPa (0.05 MPa) or less, and preferably a state of 100 hPa (0.01 MPa) or less.

An ink jet recording apparatus which is particularly preferably used in the present invention will be described in more detail. The ink jet recording method of the present invention as described above is suitably realized using the ink jet recording apparatus of the present invention as described below.

The ink jet recording apparatus which is suitably used in the present invention has transport means that transports a target recording medium, an active ray-irradiating means that irradiate active rays to the ink composition discharged onto a recording medium, a means that sets the atmosphere to a poor oxygen atmosphere during the irradiation of active rays by the active ray-irradiating means, and a control means which controls the transport means and the active ray-irradiating means while discharging the ink composition from an ink discharging portion, in which a plurality of line type ejection heads are provided in a length which corresponds to the entire width of the recordable region of the recording medium, and the ejection heads that discharges the ink composition and the active ray-irradiating means are preferably arranged in order from the upstream side in the transport direction of the recording medium.

The ink jet recording apparatus which is suitably used in the present invention is a so-called single pass system ink jet recording apparatus where the ejection heads that discharge the ink composition, and the active ray-irradiating means are preferably arranged in order from the upstream side in the transport direction of the recording medium. In addition, by setting a poor oxygen atmosphere during the exposure and curing, it is possible to suppress the polymerization inhibition of the polymerizable compound or the like and accelerate the curing reaction and thus it is possible to improve the rendering of fine portions such as thin lines.

Fig. 1 is a schematic diagram of an ink jet recording apparatus which is preferably used in the present invention. A support 6 which is stretched between support winding rolls 5 and 5', which acts as transport means for the support is transported in the arrow direction and each color of the ink composition (K: black, Y: yellow, M: magenta, C: cyan, and W: white) is discharged from an ink jet head unit 7 where ejection heads which eject ink compositions of each color are arranged.

As shown in Fig. 1, an LED light source unit 1 is surrounded by an inert gas blanket 2 and is connected to an inert gas generating device 4 via an inert gas pipe 3. Since the inert gas generating device 4 which is means for setting the atmosphere in the inert gas blanket 2 to a poor oxygen atmosphere supplies inert gas to an inner portion of the inert gas blanket 2 via an inert gas pipe 3, the atmosphere inside the inert gas blanket 2 is air in an initial state, but the air of the inert gas blanket 2 is substituted with inert gas when the inert gas generating device 4 is operated. As described above, it is possible to use N₂ or the like as the inert gas.

In the present invention, as the support, a resin film having a film thickness of 10 µm to 90 µm and containing at least one component selected from the group consisting of polyethylene terephthalate, polyethylene, polypropylene, and nylon is used.

Further, the "resin film containing at least one component" means having at least one layer formed of a component selected from the group consisting of polyethylene terephthalate, polyethylene, polypropylene, and nylon in the case where the resin film is a laminated film which has a multilayer structure. Further, the film may have two or more layers formed of components selected from the group consisting of polyethylene terephthalate, polyethylene, polypropylene, and nylon as in a laminated film of polypropylene and polyethylene.

As the polyethylene, LDPE (low density polyethylene), MDPE (medium density polyethylene), and HDPE (high density polyethylene) are preferably used, as polypropylene, CPP (cast polypropylene), OPP (biaxially oriented polypropylene), KOP (polyvinylidene chloride coated OPP), and AOP (PVA coat OPP) are preferably used, as the PET, biaxially oriented polyester is preferably used, and as the nylon, ON (oriented nylon), KON (oriented nylon), and CN (cast nylon) are preferably used.

In addition, a combined use of EVA (ethylene-vinyl acetate copolymer film), PVA (vinylon), EVOH (polyvinyl alcohol), PVC (polyvinyl chloride), PVDC (polyvinylidene chloride, Saran), cellophane (PT, MST, K cello), ZX (Zekuron (polyacrylonitrile, PAN)), and PS (polystyrene, styrol) is also preferable.

The optimal material is selected depending on the use of the package and in addition, it is possible to manufacture a film where the characteristics of each of the materials are combined by setting a film which has a multilayer structure.

In addition, with the object of improving the strength of the package, blocking oxygen, and the like, it is possible to incorporate AL (aluminum foil), a VM film (aluminum vapor deposition film or transparent vapor deposition film), or the like in the multilayer structure.

In the ink jet recording method of the present invention, an upper portion of the printed matter is preferably laminate processed after ink jet printing is performed on the support.

By the laminate processing, it is possible to suppress the elution of the ink components from the printed matter, blocking, and odor, and it is possible to preferably use the printed matter as a food package in particular.

In addition, in recent years, a coextruded film where lamination is performed at the same time as resins are extruded together from two or more parallel slits and formed into a film is preferably used. Since lamination is possible up to a maximum of 5 to 7 layers even for thin layers of several µm which cannot take the shape of a film, films with a variety of performances and applications have been made.

The ink jet recording method of the present invention preferably uses a support having a film thickness of 10 µm to 90 µm, and more preferably uses a support having a film thickness of 20 µm to 80 µm.

By adopting the ink jet recording method as described above, even with respect to various recording media for which the wettability of the surfaces are different, the dot diameter of the landed ink composition can be kept constant and the image quality can be improved. In addition, in order to obtain a color image, it is preferable that colors be superimposed in order of low brightness. By superimposing the colors in order of ink compositions with low brightness, the radiation rays reach the ink composition of the lower part more easily, and favorable curing sensitivity, a reduction in the monomer residue, and an improvement in the adhesion can be expected. Further, with the irradiation, all the colors can be discharged and exposed together, but exposing one color at a time is preferable from the viewpoint of curing promotion.

In this manner, by curing the ink composition of the present invention with high sensitivity using the irradiation of active rays, an image can be formed on the recording medium surface.

The ink composition used in the present invention is preferably used as an ink set including a plurality of inks for ink jet recording.

In the ink jet recording method of the present invention, the order of each of the colored ink compositions to be discharged is not particularly limited, but it is preferable to perform application to the recording medium from the colored ink compositions with high brightness, and in the case of using yellow, cyan, magenta, and black, it is preferable to perform the application onto the recording medium in the order of yellow, cyan, magenta, and black. In addition, in the case where white is added to the above, it is preferable to perform the application onto the recording medium in the order of white, yellow, cyan, magenta, and black. Furthermore, the present invention is not limited thereto and it is possible to preferably use the ink set of the present invention where at least a total of 7 colors are included with yellow, light cyan, light magenta, cyan, magenta, black, and white ink compositions and in such a case, it is preferable to perform the application onto the recording medium in the order of white, light cyan, light magenta, yellow, cyan, magenta, and black.

### [Examples]

Examples and Comparative Examples are shown below, whereby the present invention will be described in more detail. However, the present invention is not limited by these Examples.

Further, the "parts" in the following description indicate "parts by mass" unless otherwise noted.

The materials used in the present invention are as shown below.

### (Colorant)

- IRGALITTE BLUE GLVO (cyan pigment, manufactured by BASF Japan Co., Ltd.)
- CINQUASIA MAGENTA RT-355-D (magenta pigment, manufactured by BASF Japan Co., Ltd.)
- NOVOPERM YELLOW H2G (yellow pigment, manufactured by Clariant Co., Ltd.)
- SPECIAL BLACK 250 (black pigment, manufactured by BASF Japan Co., Ltd.)
- TIPAQUE CR60-2 (white pigment, manufactured by Ishihara Sangyo Kaisha, Ltd.)

### (Dispersant)

- SOLSPERSE32000 (dispersant manufactured by Noveon Inc.)
- SOLSPERSE36000 (dispersant manufactured by Noveon Inc.)

### (Component A) Polymerizable Compounds

### (Component A-1-1) Di(meth)acrylate Compound Having 8 to 12 Atoms in Main Chain

- SR306H (tripropylene glycol diacrylate, manufactured by Sartomer Japan Inc.)
- SR9003 (PO-modified neopentyl glycol diacrylate, manufactured by Sartomer Japan Inc.)
- SR341 (3-methyl-1,5-pentanedioldiacrylate, manufactured by Sartomer Japan Inc.)
- CD595 (1,10-decanedioldiacrylate, manufactured by Sartomer Japan Inc.)
- CD262 (1,12-dodecanedioldiacrylate, manufactured by Sartomer Japan Inc.)
- NKester A-DOD-N (1,9-nonanedioldiacrylate, manufactured by Shin-Nakamura Chemical Co., Ltd.)

### (Component A-1-2) Other Polyfunctional (Meth)acrylate monomers

- SR350 (trimethylolpropane triacrylate, manufactured by Sartomer Japan Inc.)

### (Component A-1-3) Polyfunctional (Meth)acrylate Oligomer

- CN964 A85 (bifunctional aliphatic urethaneacrylate · 15% by mass of tripropylene glycol diacrylate contained, manufactured by Sartomer Japan Inc.)

### (Component A-2-1) Monofunctional (Meth)acrylate Compound Containing Hydrocarbon Group Having 9 to 10 Carbon Atoms in Molecule

- CD217 (4-t-butylcyclohexyl acrylate, manufactured by Sartomer Japan Inc.)
- SR506 (isobornyl acrylate, manufactured by Sartomer Japan Inc.)
- FA512A (dicyclopentadienyloxyethyl acrylate (dicyclopentenyloxyethyl acrylate), manufacutured by Hitachi Chemical Co., Ltd.)

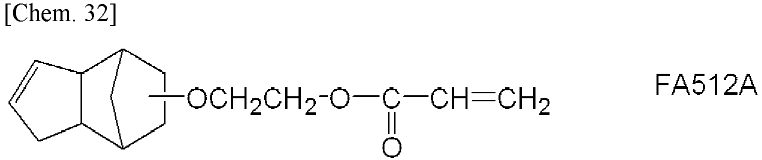

### (Component A-2-2) Monofunctional (Meth)acrylate Having Aromatic Group

- SR339 (phenoxyethyl acrylate, manufactured by Sartomer Japan Inc.)

### (Component A-3) N-Vinyllactams

- V-CAP (N-vinyl caprolactam, manufactured by ISP)

### (Component B) Polymerization Initiator

### (Component B-1) Bisacylphosphine Compound Having Molecular Weight of 340 or more

- IRGACURE 819 (bis(2,4,6-trimethylbenzoyl) phenylphosphineoxide, manufactured by BASF Japan Co., Ltd., molecular weight of 418)

### (Component B-2) α-Aminoketone Compound Having Molecular Weight of 340 or more

- IRGACURE 369 (2-benzyl-2-dimethylamino-1-(4-morpholinophenyl)butan-1-one, manufactured by BASF Japan Co., Ltd., molecular weight of 366)
- RGACURE 379 (2-dimethylamino-2-(4-methylbenzyl)-1-(4-morpholin-4-yl-phenyl)butan-1-one, BASF Japan Co., Ltd., molecular weight of 380)
- Omnipol 910 (polyethylene glycol di{β-4-[4-(2-dimethylamino-2-benzyl)butanoylphenyl]piperazine}, manufactured by Insight High Technology Co., Ltd., average molecular weight of 1,032)

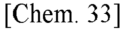

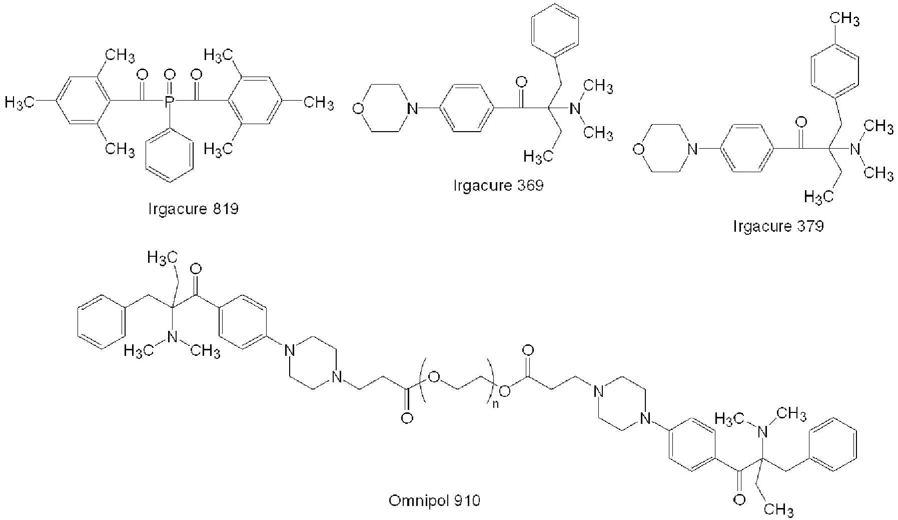

### (Component B-3) Compound Represented by Formula (1)

- Speedcure7010 (compound I-B, manufactured by Lambson)
- Omnipol TX (compound I-A, manufactured by Rahn AG, molecular weight of 820)
- Compound I-D (k, l, and m = 3)

### (Component B-4) Compound Represented by Formula (2)

- Omnipol BP (compound I-F, manufactured by Rahn AG, molecular weight of 960)
- Compound I-J (k, l, m, and n=2)

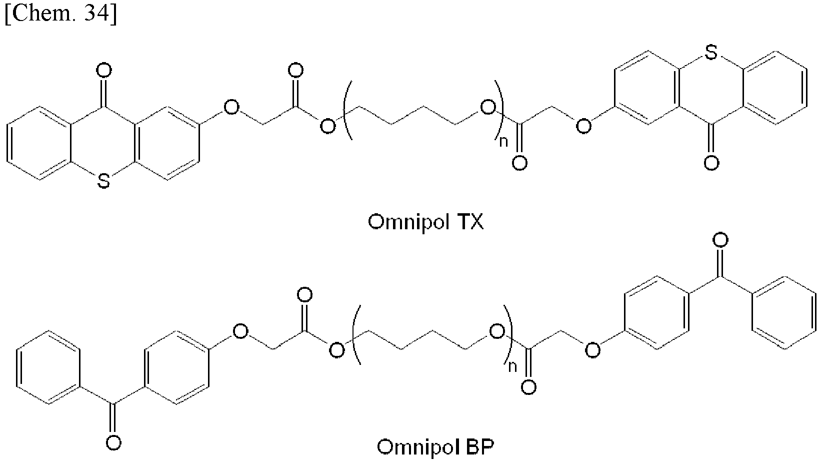

### <Synthesis of Compound I-D>

By subjecting 2-mercaptobenzoic acid and 4-chlorophenoxyacetate to a dehydration and condensation reaction in sulfuric acid, 1-chloro-4-phenoxyacetylthioxantone was obtained. Further, this product was reacted with thionyl chloride to synthesize an acid chloride, which was then reacted with PO-modified trimethylolpropane (k, l, and m = 3) to obtain a compound I-D.

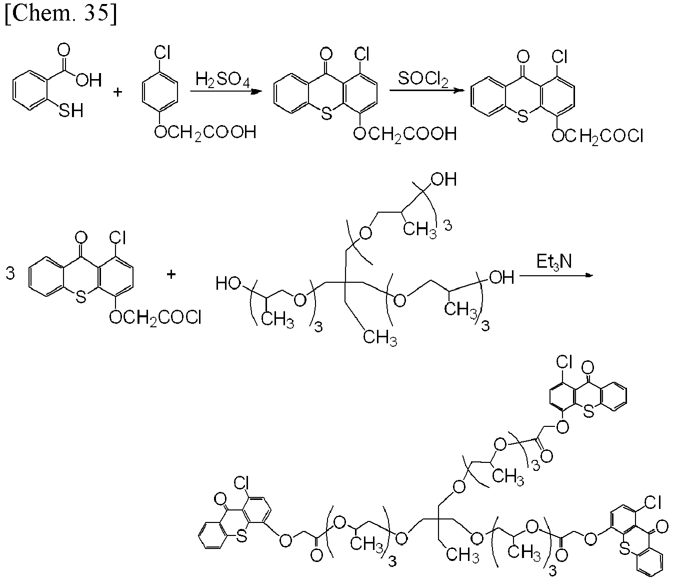

### <Synthesis of Compound I-J>

By reacting 3-phenoxyacetyl chloride benzophenone with PO-modified pentaerythritol, a compound I-J was obtained.

### (Component B-5) Other Polymerization Initiators

- Speedcure 7040 (polymer molecule amine compound, manufactured by Lambson Co., Ltd., molecular weight of 1066)
- Speedcure ITX (isopropylthioxantone, manufactured by Lambson Co., Ltd., molecular weight of 254)
- LUCIRIN TPO (2,4,6-trimethylbenzoyldiphenylphosphine oxide, BASF Japan Co., Ltd., molecular weight of 348)
- IRGACURE 184 (1-hydroxycyclohexylphenylketone, BASF Japan Co., Ltd., molecular weight of 204)
- IRGACURE 907 (2-methyl-1-[4-(methylthiophenyl)]-2-morpholinopropan-1-one, BASF Japan Co., Ltd., molecular weight of 279)

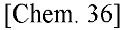

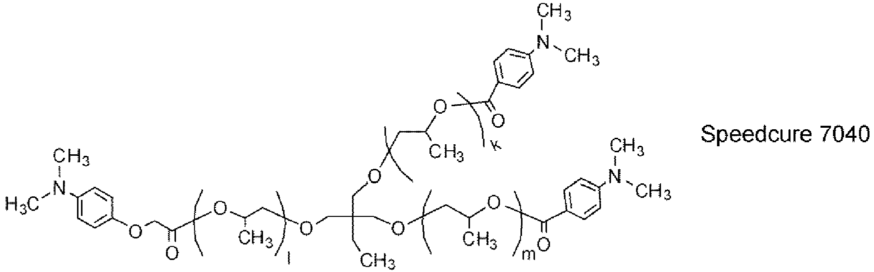

### (Polymerization Inhibitor)

F IRSTCURE ST-1 (polymerization inhibitor, mixture of a tris(N-nitroso-N-phenylhydroxyamine) aluminum salt (10% by mass) and a phenoxyethyl acrylate (90% by mass), manufactured by Chem First Co., Ltd.)

### (Surfactant)

- BYK307 (silicone-based surfactant, manufactured by BYK Chemie)

### (Preparation of Each Mill Base)

### <Preparation of Cyan Mill Base A>

300 parts by mass of IRGALITTE BLUE GLVO, 620 parts by mass of SR9003, and 80 parts by mass of SOLSPERSE32000 were mixed by stirring to obtain a cyan mill base A. Further, the preparation of the cyan mill base A was performed by placing each component into a disperser motor mill M50 (manufactured by Eiger Corp.) and dispersing the resultant for 4 hours at a circumferencial speed of 9 m/s using zirconia beads with a diameter of 0.65 mm.

### <Preparation of Magenta Mill Base B, Yellow Mill Base C, Black Mill Base D, and White Mill Base E>

In the same manner as the cyan mill base A, a magenta mill base B, a yellow mill base C, a black mill base D, and a white mill base E were prepared with the compositions and dispersion conditions shown in Table 1.

**[Table 1]**

| Mill Base | | Cyan Mill Base A | Magenta Mill Base B | Yellow Mill Base C | Black Mill Base D | White Mill Base E |
|---|---|---|---|---|---|---|
| Composition (parts) | IRGALITE BLUE GLVO | 300 | - | - | - | - |
| | CINQUASIA MAGENTA RT-355-D | - | 300 | - | - | - |
| | NOVOPERM YELLOW H2G | - | - | 300 | - | - |
| | SPECIAL BLACK 250 | - | - | - | 400 | - |
| | TIPAQUE CR60-2 | - | - | - | - | 500 |
| | SR9003 | 620 | 600 | 600 | 520 | 440 |
| | SOLSPERSE 32000 | 80 | 100 | 100 | 80 | 60 |
| Dispersion | Circumferencial speed (m/s) | 9 | 9 | 9 | 9 | 9 |
| Conditions | Time (hours) | 4 | 10 | 10 | 7 | 4 |

### (Examples 1 to 35 and Comparative Examples 1 to 7)

### <Method of Manufacturing Ink Composition>

Each of the ink compositions was obtained by mixing and stirring the materials described in Tables 2 to 4 in the amounts (parts by mass) described in Tables 2 to 4. Further, "-" in the tables has the meaning that the component is not added.

### <Ink Jet Recording Method>

In the ink jet recording apparatus shown in Fig. 1, as the ink jet heads, 4 of CA3 heads manufactured by Toshiba Tec Corp. were arranged in parallel for each of the colors, the heads were heated to 45°C, and the frequency was controlled to be able to render an image with a droplet size of 42 pL. An LED light source unit (LEDZero Solidcure, manufactured by Integration Technology Inc.) with a peak wavelength of 385 nm was arranged inside the inert gas blanket as a light source, an N₂ gas generating device Maxi-Flow 30 equipped with a compressor (manufactured by Inhouse Gas Co., Ltd.) was connected at a pressure of 0.2 mPa·s as the inert gas source, and N₂ was flown with a flow rate of 2 L/min to 10 L/min such that the N₂ concentration inside the blanket became 90% to 99% to set the N₂ concentration. A Pylen film-OTP3162 (A4 size, polypropylene sheet, film thickness of 40 µm) as a support was scanned at a speed of 30 m/min to render a 100% solid image, and the various performance tests shown below were carried out.

### <Migration Evaluation Method>

10 mL of a mixed liquid where water : ethanol = 70 : 30 was added dropwise onto a printed matter surface, the entire printed matter was placed into an airtight glass container so as not to volatize the mixed liquid and left to stand for 10 days at 40°C. Thereafter, the total elution amount (overall migration volume: OML) from the film which was contained in a water-ethanol mixture was measured and evaluated in 1 to 5 stages. Further, the measurement of the total elution amount was performed by volatizing the water-ethanol mixture which had been left to stand for 10 days, and measuring the mass of the remaining components.
5: Elution amount of less than 50 ppb.
4: Elution amount of more than 50 ppb and 200 ppb or less.
3: Elution amount of more than 200 ppb and 1,000 ppb or less.
2: Elution amount of more than 1,000 ppb and 2,000 ppb or less.
1: Elution amount of more than 2,000 ppb.

### <Odor Evaluation method>

The printed matter obtained by the above-described ink jet recording method was wrapped in a 30 cm × 30 cm vinyl bag with a zip and left to stand for 24 hours.

Thereafter, the zip was undone and the odor was evaluated. The evaluation was taken from the average of 10 people.
5: Almost odorless.
4: A slight odor, but hardly noticeable.
3: A certain amount of odor, but not an uncomfortable level.
2: A strong odor.
1: A very strong odor.

### <Blocking Resistance Evaluation>

In the above-described ink jet recording method, after a total of 5 sheets of printed matter were created, the obtained images were stacked, a 5 kg weight was placed on top, and then left to stand for 24 hours in an oven at 30°C, and the degree of sticking between images was evaluated.
5: The printed matters did not stick together at all.
4: The printed matters stuck together but were easily pulled apart by hand and there was no transfer of the image to the back surface of the upper support.
3: The printed matters stuck together and when pulled apart by the hand without care, there was some transfer of the image to the back surface of the upper support.
2: The printed matters stuck together and when pulled apart by the hand without care, there was significant transfer of the image to the back surface of the upper support.
1: The printed matters stuck together and were difficult to pull apart by the hand.

### <Curability Evaluation>

A swab was immersed in isopropyl alcohol (IPA) and the printed matter surface was rubbed with the swab, and the number of times until the support was exposed was determined.
5: More than 50 times
4: More than 30 times and 50 times or less
3: More than 10 times and 30 times or less
2: More than 5 times and 10 times or less
1: 5 times or less

### <Shrinkage Test>

After printing, the printed matter was left to stand at room temperature for 30 minutes. The curling degree of the printed matter was observed and evaluated.
5: Curling is not completely observed and the printed matter is flat.
4: Slight curling is observed.
3: Curling is seen, but the printed matter becomes flat when being drawn by the hand.
2: Curling is seen and the printed matter is uneven even when being drawn by the hand.
1: The printed matter is severely curled and the printed matter is uneven even when being drawn by the hand.

### <Flexibility Test>

After printing, the printed matter was cut to 10 cm × 10 cm, rolled in a small ball shape by the hands and then returned to the original state, and the level of cracks of the printed matter was evaluated.
5: Even when observed with a 10× lupe, cracks are not observed at all.
4: When observed with a 10× lupe, some cracks are found, but without a lupe, cracks are not found visually even when seen within 10 cm from the printed matter.
3: Some cracks are found visually even when seen within 10 cm from the printed matter, but cracks are not found visually when seen at 40 cm apart.
2: Cracks are found visually even when seen at 40 cm apart.
1: Severe cracks are found visually and some parts of the printed matter are peeled from the support.

**[Table 2]**

| | | Example | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| | Tripropylene glycol diacrylate | 30.0 | 27.8 | 31.8 | 40.8 | 18.8 | - | | - | - | - | 20.0 | - | 70.8 | - | - | - |
| | 3-Methylpentanedioldiacrylate | - | - | - | - | - | - | - | - | - | - | - | 30.0 | - | - | - | - |
| | 1,9-Nonanedioldiacrylate | - | - | - | - | - | 30.0 | - | - | - | - | - | - | - | - | - | - |
| | 1,10-Decanedioldiacrylate | - | - | - | - | - | - | 30.0 | - | - | - | - | - | - | - | - | - |
| | 1,12-Dodecanedioldiacrylate | - | - | | - | - | - | - | 30.0 | - | - | - | - | - | - | - | - |
| Component A Polymerizable compound | PO-Modified neopentyl glycol diacrylate | - | - | - | - | - | - | - | - | 30.0 | - | - | - | 16.5 | - | - | - |
| | Trimethylolpropane triacrylate | - | - | - | - | - | - | - | - | - | 30.0 | - | - | - | - | - | - |
| | CN964 A85 (uretliane acrylate oligomer | - | - | - | - | - | - | - | - | - | - | 10.0 | - | - | - | - | - |
| | Phenoxyethyl acrylate | - | - | - | - | - | - | - | - | - | - | - | - | - | - | - | 15.0 |
| | t-Butylcyclohexyl acrylate | 32.3 | 16.5 | 16.5 | 16.5 | 21.5 | 32.3 | 32.3 | 32.3 | 32.3 | 32.3 | 32.3 | 32.3 | - | 44.3 | - | 44.3 |
| | Isobornyl acrylate | - | - | - | - | - | | - | - | - | - | - | - | - | - | 44.3 | - |
| | Lauryl acrylate | 5.0 | 15.0 | 15.0 | 10.0 | 5.0 | 5.0 | 5.0 | 5.0 | 5.0 | 5.0 | 5.0 | 5.0 | - | 18.0 | 18.0 | 3.0 |
| | N-Vinyl caprolactam | 20.0 | 20.0 | 20.0 | 20.0 | 20.0 | 20.0 | 20.0 | 20.0 | 20.0 | 20.0 | 20.0 | 20.0 | - | 25.0 | 25.0 | 25.0 |
| Component B-1 to component B-4 polymerization initiator | IRGACURE 819 (Mw: 418) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Speedcure 7010(compound I-E (Mw: 1,899) | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Component B-5 Other polymerization initiators | Speedcure 7040 (Mw: 1,066) | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Cyan mill base A | 8.0 | - | - | - | - | 8.0 | 8.0 | 8.0 | 8.0 | 8.0 | 8.0 | 8.0 | 8.0 | 8.0 | 8.0 | 8.0 |
| | Magenta mill base B | - | 16.0 | - | - | - | - | - | | - | - | - | - | - | - | - | - |
| Mill base | Yellow mill base C | - | - | 12.0 | - | - | - | - | - | - | - | - | - | - | - | - | - |
| | Black mill base D | - | - | - | 8.0 | - | - | - | - | - | - | - | - | - | - | - | - |
| | White mill base E | - | - | - | - | 30.0 | - | - | - | - | - | - | - | - | - | - | - |
| Polymerization inhibitor | FIRSTCURE ST-1 | 0.1 | 0.1 | 0.1 | 0.1 | 0.1 | 0.1 | 0.1 | 0.1 | 0.1 | 0. | 0.1 | 0.1 | 0.1 | 0.1 | 0.1 | 0.1 |
| Surfactant | BYK307 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Total | | 100 | 100 | 100 | 100 | 100 | 100 | 100 | 100 | 100 | 100 | 100 | 100 | 100 | 100 | 100 | 100 |
| N₂ concentration (%) upon exposure | | 99 | 99 | 99 | 99 | 99 | 99 | 99 | 99 | 99 | 99 | 99 | 99 | 99 | 99 | 99 | 99 |
| O₂ concentration (%) upon exposure | | 1 | 1 | 1 | 1 | 1 | 1 | 1 | 1 | 1 | 1 | 1 | 1 | 1 | 1 | 1 | 1 |
| Oxygen partial pressure (atm) upon exposure | | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| Evaluation results | Migration | 4 | 4 | 4 | 4 | 4 | 4 | 3 | 3 | 4 | 4 | 4 | 4 | 4 | 3 | 3 | 3 |
| | Odor | 5 | 5 | 5 | 5 | 5 | 4 | 4 | 3 | 5 | 5 | 5 | 5 | 5 | 4 | 4 | 3 |
| | Shrinkage | 5 | 5 | 5 | 5 | 5 | 5 | 5 | 5 | 5 | 3 | 5 | 3 | 4 | 5 | 5 | 5 |
| | Blocking resistance | 5 | 5 | 5 | 5 | 5 | 4 | 4 | 4 | 5 | 5 | 5 | 4 | 4 | 4 | 3 | 4 |
| | Flexibility | 5 | 5 | 5 | 4 | 5 | 5 | 5 | 5 | 5 | 3 | 5 | 3 | 3 | 5 | 5 | 5 |
| | Curability | 5 | 5 | 5 | 5 | 5 | 5 | 5 | 5 | 5 | 5 | 5 | 5 | 4 | 5 | 5 | 5 |

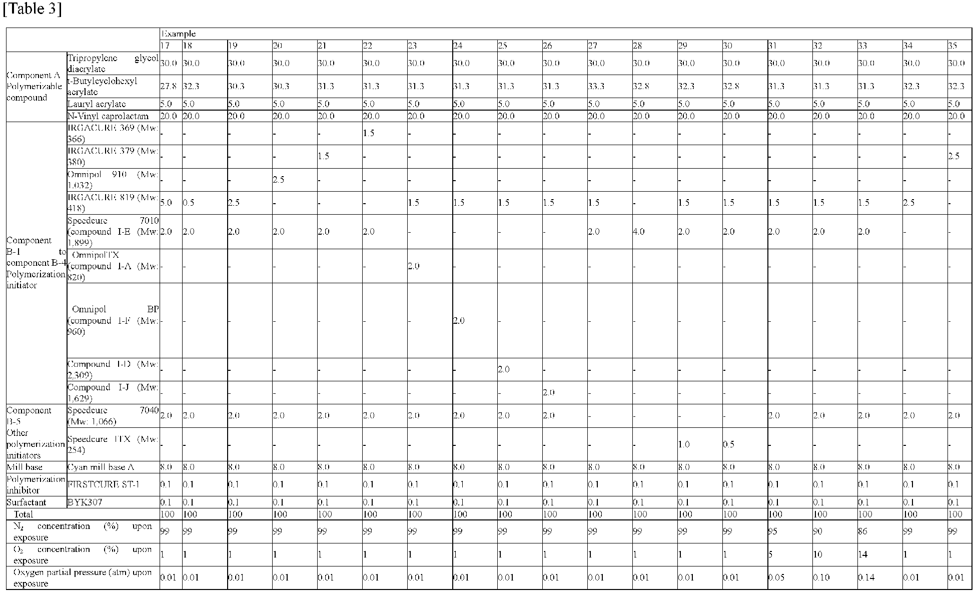

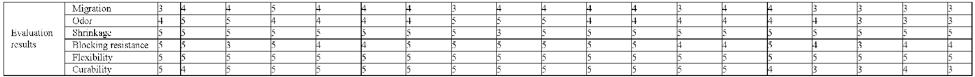

**[Table 4]**

| | | Comparative Example | | | | | | |
|---|---|---|---|---|---|---|---|---|
| | | 1 | 2 | 3 | 4 | 5 | 6 | 7 |
| Component A polymerizable compound | Tripropylene glycol diacrylate | 30.0 | 30.0 | 30.0 | 30.0 | 30.0 | 10.0 | 30.0 |
| | t-Butylcyclohexyl acrylate | 22.8 | 29.8 | 25.8 | 18.8 | 21.8 | 10.0 | 34.3 |
| | Lauryl acrylate | 5.0 | 5.0 | 5.0 | 5.0 | 5.0 | 5.0 | 5.0 |
| | Tetrahydrofurfuryl acrylate | - | - | - | - | - | 38.8 | - |
| | N-Vinyl caprolactam | 20.0 | 20.0 | 20.0 | 20.0 | 20.0 | 10.0 | 20.0 |
| Component B-1 to component B-4 polymerization initiator | IRGACURE 819 (Mw: 418) | - | 4.0 | 4.0 | 8.0 | 8.0 | 8.0 | 2.5 |
| | Speedcure 7010 (compound I-E (Mw: 1,899) | - | - | 4.0 | 4.0 | 4.0 | 4.0 | - |
| Component B-5 Other polymerization initiators | Speedcure ITX (Mw: 254) | 3.0 | 3.0 | - | - | - | - | - |
| | LUCIRIN TPO (Mw: 348) | 8.0 | - | - | 3.0 | - | 3.0 | - |
| | IRGACURE 184 (Mw: 204) | 3.0 | - | 3.0 | 3.0 | - | 3.0 | - |
| | IRGACURE 907 (Mw: 279) | - | - | - | - | 3.0 | - | - |
| Mill base | Cyan mill base A | 8.0 | 8.0 | 8.0 | 8.0 | 8.0 | 8.0 | 8.0 |
| Polymerization inhibitor | FIRSTCURE ST-1 | 0.1 | 0.1 | 0.1 | 0.1 | 0.1 | 0.1 | 0.1 |
| Surfactant | BYK307 | 0.1 | 0.1 | 0.1 | 0.1 | 0.1 | 0.1 | 0.1 |
| Total | | 100 | 100 | 100 | 100 | 100 | 100 | 100 |
| N₂ concentration (%) upon exposure | | 99 | 99 | 99 | 99 | 99 | 99 | 80 |
| O₂ concentration (%) upon exposure | | 1 | 1 | 1 | 1 | 1 | 1 | 20 |
| Oxygen partial | pressure (atm) upon exposure | 0.01 | 0.01 | 0.01 | 0.01 | 0.01 | 0.01 | 0.01 |
| Evaluation results | Migration | 1 | 2 | 1 | 2 | 1 | 2 | 2 |
| | Odor | 4 | 3 | 1 | 2 | 2 | 2 | 1 |
| | Shrinkage | 5 | 5 | 5 | 5 | 5 | 5 | 5 |
| | Blocking resistance | 4 | 3 | 5 | 5 | 5 | 5 | 5 |
| | Flexibility | 5 | 5 | 5 | 5 | 5 | 5 | 5 |
| | Curability | 5 | 5 | 4 | 5 | 5 | 5 | 5 |

### (Examples 36 to 39 and Comparative Example 8)

In the same manner as in Example 1 except that the base material (support) of Example 1 was changed to a base material (support) shown in Table 5 in Example 1, Examples 36 to 39 and Comparative Example 8 were carried out. The results are shown in Table 5.

Polypropylene (trade name Pylen Film 1146 manufactured by TOYOBO Co., Ltd., film thickness of 80 µm), polyethylene (trade name Lix Film L6100 manufactured by TOYOBO Co., Ltd., film thickness of 60 µm), polyethylene terephthalate (trade name Ester Film E5100 manufactured by TOYOBO Co., Ltd., film thickness of 12 µm), nylon (trade name Harden Film N1100 manufactured by TOYOBO Co., Ltd., film thickness of 25 µm), and polypropylene (trade name Ester Film E5101 manufactured by TOYOBO Co., Ltd., film thickness of 250 µm)

**[Table 5]**

| | | Example | | | | | Comparative Example |
|---|---|---|---|---|---|---|---|
| | | 1 | 36 | 37 | 38 | 39 | 8 |
| Support | Material | Polypropylene | Polypropylene | Polyethylene | Polyethylene terephthalate | Nylon | Polyethylene terephthalate |
| | Film pressure | 40 µm | 80 µm | 60 µm | 12 µm | 25 µm | 250 µm |
| N₂ concentration (%) upon exposure | | 99 | 99 | 99 | 99 | 99 | 99 |
| O₂ concentration (%) upon exposure | | 1 | 1 | 1 | 1 | 1 | 1 |
| Oxygen partial pressure (atm) upon exposure | | 0.01 | 0.01 | 0.01 | 0.01 | 0.01 | 0.01 |
| Evaluation results | Migration | 4 | 4 | 4 | 4 | 4 | 4 |
| | Odor | 5 | 5 | 5 | 5 | 5 | 4 |
| | Shrinkage | 5 | 5 | 5 | 4 | 4 | 5 |
| | Blocking resistance | 5 | 5 | 5 | 5 | 5 | 4 |
| | Flexibility | 5 | 4 | 5 | 5 | 5 | 2 |
| | Curability | 5 | 5 | 5 | 5 | 5 | 5 |

## Claims

1. An ink jet recording method comprising:
(step a) discharging an ink composition onto a support; and
(step b) irradiating active rays at an oxygen partial pressure of 0.15 atm or less to cure the ink composition,
wherein the support is a resin film having a film thickness of 10 µm to 90 µm and containing at least one component selected from the group consisting of polyethylene terephthalate, polyethylene, polypropylene, and nylon, and
wherein the ink composition
contains a (component A) polymerizable compound and a (component B) polymerization initiator;
contains a (component A-1) polyfunctional (meth)acrylate compound, a (component A-2) monofunctional (meth)acrylate compound, and (component A-3) N-vinyllactams as the component A in a total amount of 60% by mass or more with respect to the total ink composition;
contains at least one selected from the group consisting of a (component B-1) bisacylphosphine compound having a molecular weight of 340 or more, a (component B-2) α-aminoketone compound having a molecular weight of 340 or more, a (component B-3) compound represented by the following formula (1), and a (component B-4) compound represented by the following formula (2) as the component B; and
does not contain a polymerization initiator having a molecular weight of less than 340 or has a content of the polymerization initiator having a molecular weight of less than 340 of 1% by mass or less of the total ink composition as the component B, 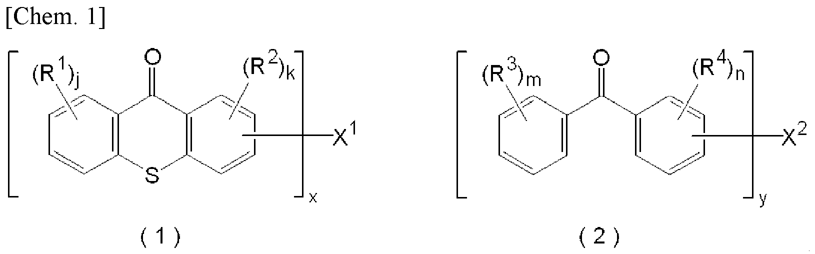
wherein in the formulae (1) and (2), R¹, R², R³, and R⁴ each independently represent an alkyl group which has 1 to 5 carbon atoms or a halogen atom, x and y each independently represent an integer of 2 to 4, j and m each independently represent an integer of 0 to 4, k and n each independently represent an integer of 0 to 3, when j, k, m, and n are integers of 2 or more, R¹, R², R³, and R⁴, which are present as a plurality, may be the same as or different from each other, X¹ represents a x-valent hydrocarbon chain having 2 to 300 carbon atoms, which may contain an ether bond and/or an ester bond, and X² represents a y-valent hydrocarbon chain having 2 to 300 carbon atoms, which may contain an ether bond and/or an ester bond.

2. The ink jet recording method according to claim 1, wherein the active rays are LED.

3. The ink jet recording method according to claim 1 or 2, wherein the ink composition contains the component B-3 and/or the component B-4.

4. The ink jet recording method according to any one of claims 1 to 3, wherein the ink composition contains the component B-1 and/or the component B-2, and the component B-3 and/or the component B-4.

5. The ink jet recording method according to any one of claims 1 to 4, wherein the ink composition contains the component A-1, the component A-2, and the component A-3.

6. The ink jet recording method according to any one of claims 1 to 5, wherein a (component A-1-1) di(meth)acrylate compound having 8 to 12 atoms in the main chain is contained as the component A-1.

7. The ink jet recording method according to claim 6, wherein the component A-1-1 is at least one selected from the group consisting of ethylene oxide-modified neopentyl glycol di(meth)acrylate, propylene oxide-modified neopentyl glycol di(meth)acrylate, ethylene oxide-modified hexanediol di(meth)acrylate, propylene oxide-modified hexanediol di(meth)acrylate, nonanediol di(meth)acrylate, decanediol di(meth)acrylate, dodecanediol di(meth)acrylate, tripropylene glycol di(meth)acrylate, and triethylene glycol di(meth)acrylate.

8. The ink jet recording method according to any one of claims 1 to 7, wherein at least one selected from the group consisting of a (component A-2-1) monofunctional (meth)acrylate compound containing a hydrocarbon group having 9 to 10 carbon atoms in the molecule, a (component A-2-2) monofunctional (meth)acrylate compound having an aromatic group, and a (component A-2-3) monofunctional (meth)acrylate compound containing a long-chain alkyl group having 12 to 18 carbon atoms in the molecule is contained as the component A-2.

9. The ink jet recording method according to claim 8, wherein the component A-2-1 is at least one selected from the group consisting of t-butylcyclohexyl acrylate, dicyclopentenyloxyethyl acrylate, 3,3,5-trimethylcyclohexyl acrylate, and isobornyl acrylate.

10. The ink jet recording method according to claim 8 or 9, wherein the component A-2-2 is phenoxyethyl acrylate.

11. The ink jet recording method according to any one of claims 1 to 10, wherein N-vinyl caprolactam is contained as the component A-3.

12. The ink jet recording method according to any one of claims 1 to 11, wherein the compound represented by the formula (1) is a compound represented by the formula (1'), and the compound represented by the formula (2) is a compound represented by the formula (2'), 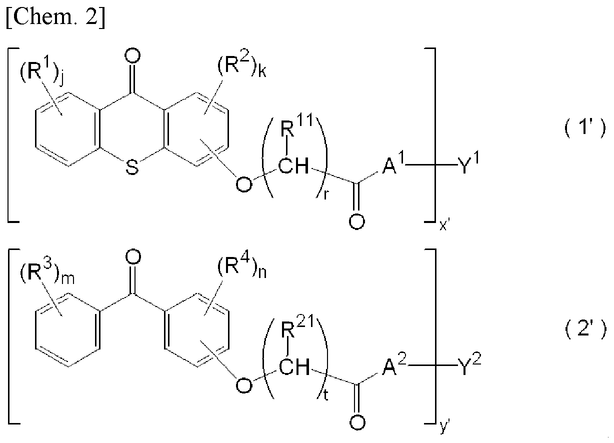 wherein in the formula (1'), R¹, R², j, and k have the same meanings as R¹, R², j, and k in the formula (1), R¹¹'s each independently represent a hydrogen atom or an alkyl group having 1 to 4 carbon atoms, r's each independently represent an integer of 1 to 6, x' represents an integer of 2 to 4, Y¹ represents a residue where hydrogen atoms of x' hydroxy groups are removed from polyhydroxy compounds which have at least x' hydroxy groups, and A¹ represents at least one group selected from the group consisting of the following (i) to (iii); and in the formula (2'), R³, R⁴, m, and n have the same meanings as R³, R⁴, m, and n in the formula (2), R²¹'s each independently represent a hydrogen atom or an alkyl group having 1 to 4 carbon atoms, t's each independently represent an integer of 1 to 6, y' represents an integer of 2 to 4, Y² represents a residue where hydrogen atoms of y' hydroxy groups are removed from polyhydroxy compounds which have at least y' hydroxy groups, and A² represents at least one group selected from the group consisting of the following (i) to (iii),
[Chem. 3]
* -[O(CHR¹²CHR¹³)ₐ]_{d}-** (i)
*-[O(CH₂)_{b}CO]_{d}-** (ii)
*-[O(CH₂)_{b}CO]_{(d-1)}-[O(CHR¹²CHR¹³)ₐ]-** (iii)
wherein in the formulae (i) to (iii), either one of R¹² and R¹³ represents a hydrogen atom and the other represents a hydrogen atom, a methyl group, or an ethyl group, a represents an integer of 1 or 2, b represents an integer of 4 or 5, and d represents an integer of 1 to 20, * represents the bonding position with the carbonyl carbon and ** represents the bonding position with Y¹ or Y².

13. The ink jet recording method according to any one of claims 1 to 12, wherein the ink composition contains the component B-3.

14. The ink jet recording method according to any one of claims 1 to 13, wherein bis(2,4,6-trimethylbenzoyl)-phenylphosphine oxide is contained as the component B-1.

15. The ink jet recording method according to any one of claims 1 to 14, wherein at least one selected from the group consisting of 2-benzyl-2-dimethylamino-1-(4-morpholinophenyl)-butanone-1, 2-dimethylamino-2-(4-methylbenzyl)-1-(4-morpholin-4-yl-phenyl)-butan-1-one, and polyethylene glycol di{β-4-[4-(2-dimethylamino-2-benzyl)butanoylphenyl]piperazine} is contained as the α-aminoketone compound having a molecular weight of 340 or more.

16. The ink jet recording method according to any one of claims 1 to 15, which is used for package printing.

17. A printed matter obtained by the ink jet recording method according to any one of claims 1 to 16.
